# EUROPEAN PATENT SPECIFICATION

(11) **EP 2 172 340 B1**
(45) Date of publication and mention of the grant of the patent: **06.11.2013**
(21) Application number: 08776870.1
(22) Date of filing: 23.07.2008
(51) Int. Cl.: B29D 11/00, B41F 17/00, B41M 3/06, B41M 3/16, G02B 27/22, G02B 3/00, B41F 19/00

(54) **STEREOSCOPIC IMAGE FORMING APPARATUS AND FORMING METHOD**
STEREOSKOPISCHEN BILDES ERZEUGUNGSVORRICHTUNG UND ERZEUGUNGSVERFAHREN
APPAREIL DE FORMATION D'IMAGE STÉRÉOSCOPIQUE ET PROCÉDÉ DE FORMATION

(30) Priority: 24.07.2007 JP 2007191994
(43) Date of publication of application: 07.04.2010
(73) Proprietor: Grapac Japan Co., Inc., Tokyo 1310031 (JP)
(72) Inventor: YUMOTO, Yoshihide, Tokyo 131-0031 (JP); OMORI, Kazushi, Tokyo 131-0031 (JP)
(74) Representative: Wagner, Bernhard Peter
(86) International application number: PCT/JP2008/001961
(87) International publication number: WO 2009/013897

(56) References cited:
- JP-A- 11 123 729
- JP-A- 57 087 318
- US-A- 3 317 334
- US-A- 5 330 799

## Description

### TECHNICAL FIELD

The present invention relates to a concavo-convex image forming unit and a concavo-convex image forming method that enable a concavo-convex image of a desired shape to be formed as desired on a sheet material, and to an image forming apparatus and an image forming method that enable the efficient forming of a highly accurately registered planar image and desired-shape concavo-convex image on the sheet material.

### BACKGROUND

As general methods for forming a concavo-convex image on a base material on which an image has been formed (hereinafter, may be called the image-forming material), for example, a method for forming a concavo-convex image by emboss printing on the image-forming material, and a method for forming a concavo-convex image by applying an ultraviolet curable resin to the image-forming material, and thereafter curing the ultraviolet curable resin are known.

However, in these methods, since the image-forming substance (for example, ink, resin, or the like), which is applied to the surface of the image-forming material, is normally in either a liquid or melt-softened state, the image-forming substance is unable to maintain the initial configuration that was applied to the surface of the image-forming material (a configuration that will enable the formation of the intended concavo-convex image). Therefore, in addition to the fact that it is not always possible to form the intended concavo-convex image, reproducibility can also deteriorate. Furthermore, it goes without saying that a concavo-convex image having large undulations could not be formed using these methods.

In particular, the practice of making concavo-convex images tinier and more complex has rapidly progressed in recent years, and in most cases, the above-mentioned methods are not capable of reproducibly forming as desired a concavo-convex image that has been either miniaturized or made more complex like this.

As a method for forming a concavo-convex image on an image-forming material other than the above-mentioned methods, for example, Patent Document 1 discloses "A film manufacturing method having a concave-convex surface comprising a photo curable resin, **characterized in that** subsequent to passing a film base material between an intaglio printing roller and a pressure roller, the photo curable resin is fed between the intaglio printing roller and the film base material prior to the film base material and the intaglio printing roller making contact as the film base material is being transported such that this film base material makes contact with the surface of the intaglio printing roller, and thereafter, the film base material is press-forced between the intaglio printing roller and the pressure roller, and the photo curable resin is filled into the concave portions of the intaglio printing roller, and, in addition, the film base material is brought into contact with the photo curable resin that has saturated the surface and concave portions of this intaglio printing roller, a light is emitted from the film base material side and/or the inner side of the intaglio onto the segment where the saturated photo curable resin is in contact with the film base material and the surface and concave portion of the intaglio printing roller, causing the photo curable resin interposed between the intaglio and the film base material to harden, this resin and the film base material adhere to one another, and thereafter, the film base material is peeled away from the intaglio."

In recent years, attention has focused on image formation on cards, packages, and the like that form concavo-convex images in relatively thick image-forming material of 0.1 mm or thicker. Making thick image-forming material like this into a long shape can cause lower workability and higher costs due to the need to enlarge the size of the roller onto which the image-forming material is wound and to increase roller replacement frequency due to the shortening of the length of the roller, and can give rise to core set curl in the image-forming material. To avoid these problems, the relatively thick image-forming material is used as sheets instead of one long object. However, because the method disclosed in Patent Document 1 is one that forms a concave-convex image on a long object, such as a long piece of film, naturally, this prior art can only form a concave-convex image of a long object, and is not able to transport a plurality of sheets sequentially at respective intervals and form a desired concave-convex image on each of these transported sheets.

Now then, in addition to the image formation for which a concave-convex image is formed on the image-forming material, there is also an image formed matter for which an image other than the concave-convex image, for example, a planar image, is formed on the image-forming material. Among image formed matters such as this, there are those that require that the formation locations of the other image and the concave-convex image formed on the sheet relatively match up, that is, that the other image and the concave-convex image be registered with one another. Such image formed matters, for example, include a stereoscopic lenticular sheet on which is formed a lenticular lens as one type of concave-convex image and a lenticular planar image as the other image, and a stereoscopic integral photography sheet on which is formed a microarray lens as one type of concave-convex image and an integral photography (may be called IP in this invention) planar image as the other image. When the concave-convex images formed on these stereoscopic sheets do not maintain the target configuration, the sheets do not function as lenses and the initial function of the stereoscopic sheet is not exhibited when the planar image is viewed via the concave-convex image. In addition, when the planar images formed on these stereoscopic sheets are aggregates of fragment images split by their respective stereoscopic principles and the formation locations of the concave-convex image and planar image are not extremely closely matched, the stereoscopic quality of the planar image cannot be maintained and the initial function of the stereoscopic sheet is not exhibited when the planar image is viewed via the concave-convex image.

However, as explained above, it is impossible to form a desired concave-convex image on separate sheets with any of the methods described hereinabove. Moreover, since it normally requires two processes, a concave-convex image forming process and a planar image forming process, to form a planar image and a concave-convex image on a sheet such that the formation locations of the planar image and the concave-convex image match, manufacturing efficiency is reduced and costs increased. Further, even if the formation locations of the two images are adjusted by setting the setting conditions of the image forming unit such that the registration of the planar image and the concave-convex image is highly accurate, when two processes are used to form the two images, the formation locations of the two images will differ slightly on each sheet due to problems related to the mechanical precision of the image forming unit, with the result being that it is impossible to manufacture stereoscopic sheets having registered planar images and concave-convex images with high yields. It is particularly difficult for a stereoscopic IP sheet having a tiny concave-convex image to reproducibly realize highly accurate registration in addition to highly accurately registering the planar image and concave-convex image.

Patent Document 2 discloses "A printer equipped with a hologram forming unit, constituted such that a varnishing unit (8) is provided following a printing unit (1) to apply post-processing to a printed sheet (7), this varnishing unit (8) applies an ultraviolet curing-type varnish to the surface of the sheet (7), a hologram forming unit (15) is concatenated following this varnishing unit (8), this hologram forming unit (15) has a mechanism (18) for feeding a casting film (17) on which a hologram surface has been formed beforehand, this feeding mechanism (18), in synch with the printing speed, guides the casting film (17) to the vicinity of the periphery of an impression cylinder (16), the hologram surface of the casting film (17) is brought into pressure-contact with the sheet (7) via a pair of rollers (22) and (23), which are controlled so as to enable contact/separation relative to this impression cylinder (16), and an ultraviolet radiation emitter (24) controllably emits ultraviolet radiation between the pair of rollers (22) and (23) onto the impression cylinder (16)."

However, since it is recognized that the hologram forming unit-equipped printer of Patent Document 2 is a printer that forms a hologram over the entire printed surface of a printed sheet (7), no consideration whatsoever is given to registering the image printed on the sheet (7) to the hologram. Therefore, it is also impossible to register a planar image and a concave-convex image with a high degree of accuracy using the hologram forming unit-equipped printer of Patent Document 2.

Patent Document 1: Specification of Japanese Patent No. 2811000
Patent Document 2: Japanese Patent Laid-open No. 2006-315229

US 5,330,799 A describes methods and apparatus for producing autostereograms using ultraviolet radiation-curable thermosetting polymers. A stereoscopic image is printed upon a plastic or paper sheet, which is fed directly onto a surface having an inverse lenticular pattern relief. As the sheet is fed onto the surface, a flow of ultraviolet-curable thermosetting polymer resin is directed at the surface. Ultraviolet radiation is directed at the polymer layer, curing the polymer and forming a lenticular array on the front surface of the polymer layer. During this process, the sheet carrying the stereoscopic image is bonded to the back surface of the polymer lenticular layer in precise registration with the lenticular array. In a preferred embodiment of the invention, the inverse lenticular pattern relief is on the outer surface of a transparent cylinder. The polymer layer is cured as it is flowed onto the relief pattern by an ultraviolet lamp placed within the transparent cylinder.

US 3,317,334 A relates to an apparatus for coating sheet material and the like. The apparatus for applying a coating to predetermined areas of material comprising a frame, a coating cylinder mounted parallel to the impression cylinder cooperating therewith defining a nip through which the material is passed, means on the surface of the coating cylinder including carrier depression in the surface thereof defining the area of coating to be applied, means for supplying a hot melt coating material to the surface of the coating cylinder, doctor means contacting the coating cylinder in advance of the coating nip for clearing the melt therefrom except in the depressions, a surfacing cylinder mounted parallel to the impression cylinder and cooperating therewith defining a nip relatively closely spaced with respect to the coating nip, means for cooling the surfacing cylinder providing for chilling of the coating deposited on the material, means including a transfer cylinder supported in cooperating relation with the surfacing cylinder to maintain the coated material wrapped on the surfacing cylinder over a substantial portion of the peripheral surface thereof and then to remove the material from the surfacing cylinder at speeds producing substantially equal peripherals speeds of the cylinder.

### DISCLOSURE OF THE INVENTION

An object of the present invention is to provide a concave-convex image forming unit and a concave-convex image forming method that make it possible to form as desired a concave-convex image of a desired shape on a sheet material.

Another object of the present invention is to provide an image forming apparatus and an image forming method that make it possible to efficiently form on a sheet material a planar image and a concave-convex image of a desired shape, which have been highly accurately registered.

Yet another object of the present invention is to provide a concave-convex image formed matter made by a concave-convex image of a desired shape being formed as desired on a sheet material, and to provide an image formed matter made by a concave-convex image of a desired shape, which is registered with a high degree of accuracy relative to a planar image, being formed as desired in a sheet material on which the planar image has been formed.
These objects are solved by a concave-convex image forming unit, an image forming apparatus and a concave-convex image forming method according to the independent claims.

A concave-convex image forming unit comprises (1) a die cylinder, which has a mounting mechanism for mounting a concavo-convex image forming die having a concavo-convex image forming surface and a mounting surface, such that the concavo-convex image forming surface is on the outer side, and a gripper mechanism for superposingly fastening a sheet material to the above-mentioned concavo-convex image forming surface, and, for transporting the above-mentioned sheet material, and in which the above-mentioned concavo-convex image forming die is mounted to the outer circumferential surface; (2) a resin feeder for feeding a photo curable resin to the above-mentioned concavo-convex image forming surface before the above-mentioned gripper mechanism fastens the above-mentioned sheet material to the above-mentioned concavo-convex image forming surface; (3) an impression cylinder for bringing the above-mentioned sheet material into close contact with the above-mentioned concavo-convex image forming surface, onto which the above-mentioned photo curable resin has been fed, after the above-mentioned gripper mechanism has fastened the above-mentioned sheet material to the above-mentioned concavo-convex image forming surface; and (4) an emitter for emitting a light from the above-mentioned sheet material side in a state in which the above-mentioned sheet material and the above-mentioned concavo-convex image forming surface are in close contact.

An image forming apparatus comprises (1) at least one planar image forming unit, which comprises a gripper mechanism for fastening a sheet material to a cylinder, and for transporting the above-mentioned sheet material, and which forms a planar image on the above-mentioned sheet material; (2) the concavo-convex image forming unit disclosed in Claim 1; and (3) a sheet material transporter for transporting the above-mentioned sheet material either from the above-mentioned planar image forming unit to the above-mentioned concavo-convex image forming unit or from the above-mentioned concavo-convex image forming unit to the above-mentioned planar image forming unit by a gripping changeover in the gripper mechanism.

A concavo-convex image forming method comprises: (1) mounting a concavo-convex image forming die having a concavo-convex image forming surface and a mounting surface on the outer circumferential surface of a die cylinder having the gripper mechanism disclosed in Claim 1 such that this concavo-convex image forming surface is on the outer side; (2) feeding a photo curable resin to the above-mentioned concavo-convex image forming surface; (3) bringing a sheet material, which has been superposingly fastened to the above-mentioned concavo-convex image forming surface, in close contact with the above-mentioned concavo-convex image forming surface; and (4) emitting a light from the above-mentioned sheet material side in a state in which the above-mentioned sheet material and the above-mentioned concavo-convex image forming surface are in close contact.

An image forming method comprises: transporting a sheet material on which a concavo-convex image has been formed by the concavo-convex image forming method disclosed above to a planar image forming unit by a gripping changeover in the gripper mechanism; and forming a planar image comprising at least one color on the transported sheet material.

An image forming method comprises the steps of (1) mounting a concavo-convex image forming die having a concavo-convex image forming surface and a mounting surface on the outer circumferential surface of a die cylinder having the gripper mechanism disclosed above such that this concavo-convex image forming surface is on the outer side; (2) feeding a photo curable resin onto the above-mentioned concavo-convex image forming surface; (3) transporting a sheet material, on which a planar image comprising at least one color has been formed by a planar image forming unit, to the die cylinder by a gripping changeover in the gripper mechanism; (4) bringing the above-mentioned sheet material, which has been superposingly fastened to the above-mentioned concavo-convex image forming surface, in close contact with the above-mentioned concavo-convex image forming surface; and (5) emitting a light from the above-mentioned sheet material side in a state in which the above-mentioned sheet material and the above-mentioned concavo-convex image forming surface are in close contact.

A concavo-convex image formed matter can be produced by the concavo-convex image forming method disclosed above.

An image formed matter can be produced by the image forming method disclosed above.

Since the concavo-convex image forming unit related to the present invention comprises a die cylinder having a gripper mechanism by which a concavo-convex image forming die is mounted by the above-mentioned mounting mechanism such that the concavo-convex image forming surface of the concavo-convex imaged forming pattern is on the outer side, and since the concavo-convex image forming method related to the present invention utilizes the above-mentioned die cylinder, the photo curable resin, which is fed onto the concavo-convex image forming surface, is cured in a state in which this photo curable resin is in close contact with the sheet material transported by the above-mentioned die cylinder. As a result of this, the photo curable resin is able to maintain the shape of the concavo-convex image forming surface, that is, the initial shape until cured even when the photo curable resin is in a liquid or a melt-softened state. Therefore, in accordance with the present invention, it is possible to provide a concavo-convex image forming unit and concavo-convex image forming method that make it possible to form a concavo-convex image of a desired shape on a sheet material as desired.

Further, since the image forming apparatus related to the present invention comprises a concavo-convex image forming unit having the above-mentioned die cylinder, it is possible to maintain the shape of the concave-convex image forming surface until the photo curable resin has been cured, and, in addition, since the image forming apparatus comprises the above-mentioned sheet material transporter, the relative gripping positions of the gripper mechanisms relative to the sheet material does not substantially change before or after sheet material transport. Further, the image forming method related to the present invention makes use of the above-mentioned die cylinder and the above-mentioned sheet material transporter. Therefore, in accordance with the present invention, it is possible to provide an image forming apparatus and an image forming method that make it possible to efficiently form a planar image and a concavo-convex image of a desired shape on a sheet material.

Furthermore, the concavo-convex image formed matter and image formed matter are produced by the concavo-convex image forming method and the image forming method related to the present invention.

### BRIEF DESCRIPTION OF THE DRAWINGS

Fig. 1 is an approximate front view showing a concavo-convex image forming unit, which is one embodiment of a concavo-convex image forming unit related to the present invention;
Fig. 2 is an approximate front view showing a concavo-convex image forming die-mounted die cylinder of the concavo-convex image forming unit related to the present invention;
Fig. 3 is an approximate enlarged view showing one part of a concavo-convex image forming die-mounted die cylinder of the concavo-convex image forming unit related to the present invention;
Fig. 4 is an approximate enlarged view showing a gripper mechanism of a die cylinder in a concavo-convex image forming unit related to the present invention, in which Fig. 4(a) is a rough diagram showing the open state of the gripper, and Fig. 4(b) is a rough diagram showing the gripping state of the gripper;
Fig. 5 is an approximate front view showing a concavo-convex image forming die, which is one embodiment of an concavo-convex image forming die mounted to the die cylinder of the concavo-convex image forming unit related to the present invention;
Fig. 6 is an approximate front view showing a concave-convex image forming unit, which is one embodiment of the concave-convex image forming unit related to the present invention;
Fig. 7 is an approximate front view showing a lens sheet;
Fig. 8 is an approximate top view showing an array of convex lenses on a lens sheet,
Fig. 9 is an approximate front view showing a lens sheet;
Fig. 10 is an approximate front view showing an image forming unit, which is one embodiment of an image forming unit related to the present invention;
Fig. 11 is a schematic diagram illustrating the positional relationship between the grippers of an intermediate cylinder and the grippers of a die cylinder;

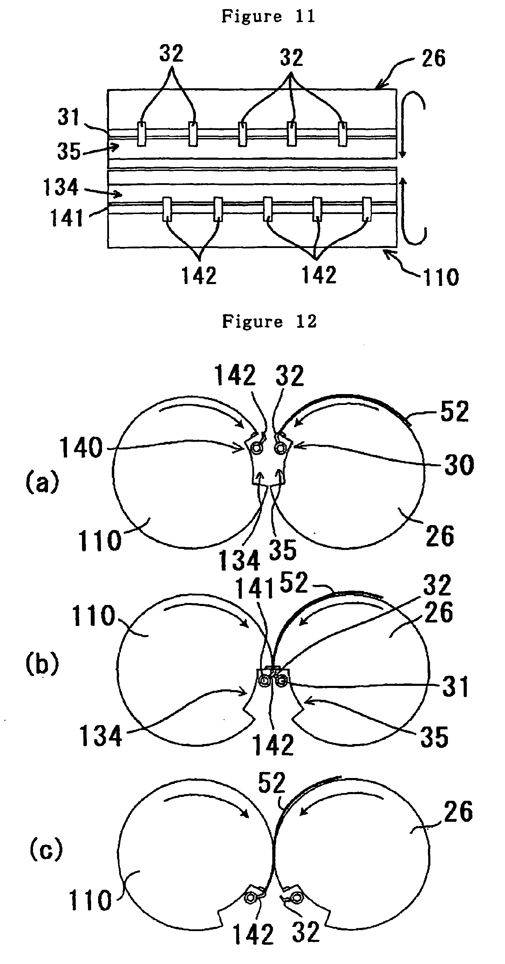

Fig. 12 is a schematic diagram illustrating a mechanism that uses a gripper mechanism to transport a sheet material from an intermediate cylinder to a die cylinder, in which Fig. 12 (a) is a schematic diagram illustrating a state in which a sheet material is fastened to the intermediate cylinder, Fig. 12 (b) is a schematic diagram illustrating a state in which a sheet material is being gripped by the gripper of the intermediate cylinder and the gripper of the die cylinder, and Fig. 12 (c) is a schematic diagram illustrating a state in which the grip on the sheet material changes over from the intermediate cylinder to the die cylinder;
Fig. 13 is an approximate front view showing an image forming unit, which is another embodiment of the image forming unit related the present invention;
Fig. 14 is an approximate front view showing an image forming unit, which is yet another embodiment of the image forming unit related to the present invention;
Fig. 15 is an approximate front view showing an image forming unit, which is still yet another embodiment of the image forming unit related to the present invention;
Fig. 16 is an approximate front view showing an stereoscopic IP sheet; and
Fig. 17 is an approximate front view showing a stereoscopic lenticular sheet.

1, 2, 3, 4 IMAGE FORMING APPARATUS
10 PLANAR IMAGE FORMING UNIT GROUP
10B BLACK IMAGE FORMING UNIT
10C CYAN IMAGE FORMING UNIT
10M MAGENTA IMAGE FORMING UNIT
10Y YELLOW IMAGE FORMING UNIT
11B, 11C, 11M, 11Y, 42, 115 IMPRESSION CYLINDER
12B, 12C, 12M, 12Y BLANKET CYLINDER
13B, 13C, 13M, 13Y PLATE CYLINDER
14B, 14C, 14M, 14Y WATER FEEDING MECHANISM
15B, 15C, 15M, 15Y INK FEEDING MECHANISM
16 INK DRIER
21, 22, 23, 24 INTERMEDIATE CYLINDER
26, 27, 28 SHEET MATERIAL TRANSPORTER
30, 140 GRIPPER MECHANISM
31, 141 SUPPORT SHAFT
32, 142 GRIPPER
33, 143 FIXED PART
34, 144 GRIPPING PIECE
35 GROOVE PART
40 SURFACE COATING UNIT
41 STORAGE PART
43 FIRST FEED ROLLER
44 SECOND FEED ROLLER
50, 51 LENS SHEET (CONVEX LENS AGGREGATE)
52 SHEET MEMBER
53 THE ONE SURFACE
54 THE OTHER SURFACE
55, 56 CONVEX LENS
57 STEREOSCOPIC IP SHEET
58 IP IMAGE
59 STEREOSCOPIC LENTICULAR SHEET
60 LENTICULAR IMAGE

100 CONCAVO-CONVEX IMAGE FORMING UNIT
101 CONCAVO-CONVEX IMAGE FORMING UNIT
110, 111 DIE CYLINDER
116 CYLINDER
130 MOUNTING MECHANISM
131 FIRST MOUNTING MECHANISM
132 SECOND MOUNTING MECHANISM
133 FIRST GROOVE PART
134 SECOND GROOVE PART
135 FIRST FASTENING MEMBER
136 SECOND FASTENING MEMBER
150 RESIN FEEDER
151 RESIN STORAGE PART
152 FEED ROLLER
160 LIGHT EMITTER
161 ULTRAVIOLET LAMP
162 REFLECTING PLATE
170 CONCAVO-CONVEX IMAGE FORMING DIE
171 CONCAVO-CONVEX IMAGE FORMING SURFACE
172 MOUNTING SURFACE
173 CONCAVO-CONVEX PATTERN
174 THE ONE EDGE
175 THE OTHER EDGE

### BEST MODE FOR CARRYING OUT THE INVENTION

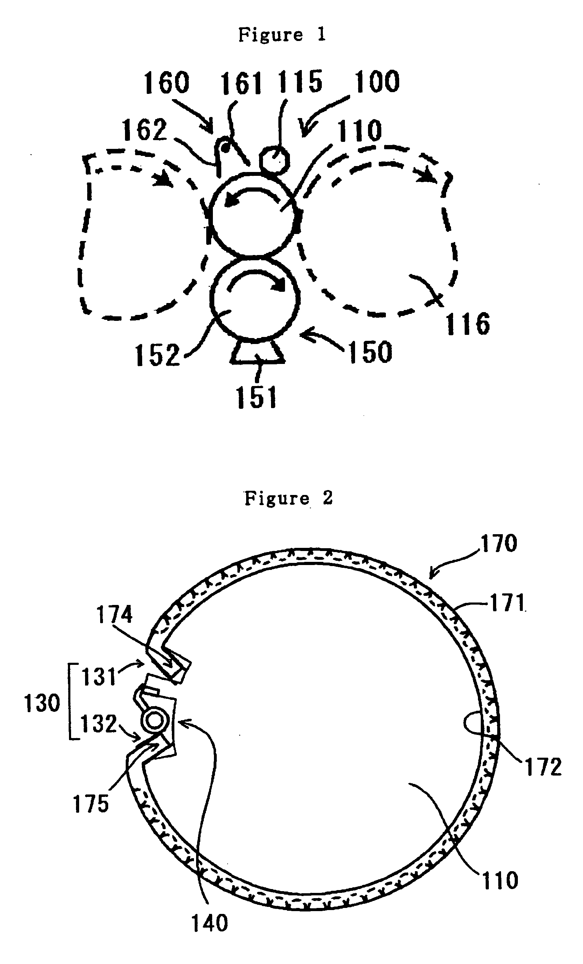

A concavo-convex image forming unit 100, which is one embodiment of a concavo-convex image forming unit related to the present invention, will be explained by referring to the figures. This concavo-convex image forming unit 100, as shown in Fig. 1, is characterized by comprising a die cylinder 110, which has a concavo-convex image forming die (not shown in Fig. 1) mounted on the outer circumferential surface thereof, a resin feeder 150, an impression cylinder 115, and a light emitter 160.

The die cylinder 110 that is a component of the concavo-convex image forming unit 100 has a cylindrical body as shown in Figs. 1 and 2, and is supported rotatably around the central axis thereof. The direction of rotation of the die cylinder 110 is not particularly limited, and in this example, is adjusted to rotate to the left as indicated by the solid arrow in Fig.1. The outside diameter of the die cylinder 110 is not particularly limited, and can be arbitrarily adjusted in accordance with the outside diameter of a cylinder 116 (indicated by the broken line in Fig. 1) that is arranged adjacent to the die cylinder 110 as desired. Besides simultaneously comprising a mounting mechanism 130 and a gripper mechanism 140, which will be described hereinbelow, the die cylinder 110, for example, is fundamentally configured the same as an impression cylinder in an ordinary image forming apparatus.

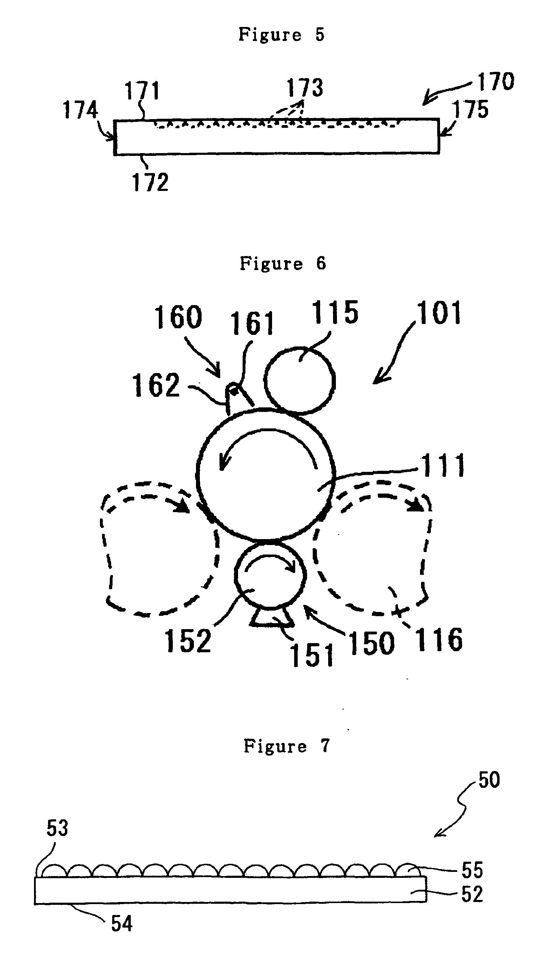

As shown in Fig. 2, one concavo-convex image forming die 170 is mounted on the outer circumferential surface of this die cylinder 110 by the below-described mounting mechanism 130. This concavo-convex image forming die 170 is a die that has a concavo-convex pattern 173 (Refer to Fig. 5) of a shape that is complementary to a concavo-convex image to be formed on either the whole or one portion of the surface of a sheet material. The concavo-convex image forming die 170 is in the shape of a plate, and has a concavo-convex image forming surface 171 and a mounting surface 172 as shown in Fig. 5. Then, the concavo-convex pattern 173 is formed on practically the entire surface of the concavo-convex image forming surface 171. Depending on the concavo-convex image to be formed on the sheet material, this concavo-convex pattern 173 is formed in a concavo-convex shape that is the inverse of this concavo-convex image. For example, if the concavo-convex image is a micro lens array, a concavo-convex pattern, which is constituted by arranging a plurality of concave parts capable of forming the respective lenses into a predetermined pattern, is formed, and if the concavo-convex image is a lenticular lens, a concavo-convex pattern, which is constituted by arranging in a predetermined direction a plurality of concave parts that extends in one direction and is capable of forming the respective lenses, is formed. Furthermore, since the concavo-convex image forming die 170 is mounted to the outer circumferential surface of the die cylinder 110, the size, shape, layout and so forth of this concavo-convex pattern 173 is arbitrarily adjusted by taking into account the thickness of the concavo-convex image forming die 170 and the outside diameter of the die cylinder 110 such that when the concavo-convex image formed in accordance therewith is made planar, a concavo-convex image having the desired shape, layout, and so forth is produced. Furthermore, the dimensions of the concavo-convex image forming die 170 are fixedly decided in accordance with the machine size (die cylinder size). The concavo-convex pattern 173 of the concavo-convex image forming die 170 is adjusted to an appropriate size in accordance with the size of the concavo-convex image to be formed, and the size of the sheet material.

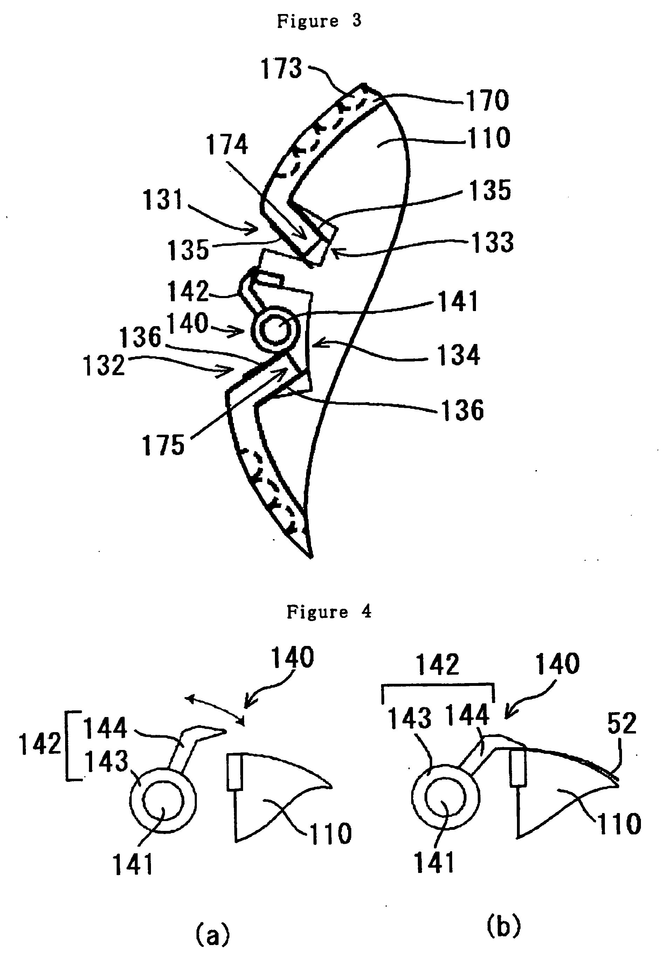

The die cylinder 110, as shown in Figs. 2 and 3, comprises a mounting mechanism 130 for mounting the concavo-convex image forming die 170. This mounting mechanism 130 grips the concavo-convex image forming die 170 in the vicinity of the two opposing edges 174, 175 (refer to Fig. 5), and mounts the concavo-convex image forming die 170 to the outer circumferential surface of the die cylinder 110 in a state in which tensile force is applied in the circumferential direction of the die cylinder 110.

This mounting mechanism 130, as shown in Figs. 2 and 3, comprises a first mounting mechanism 131 and a second mounting mechanism 132 disposed on the outer circumferential surface of the die cylinder 110 so as to be parallel to each other in the axial direction of the die cylinder 110. As shown in Figs. 2 and 3, the first mounting mechanism 131 comprises a first groove part 133 having a predetermined depth that extends in the axial direction of the die cylinder 110, and one set of first fastening members 135, which is housed in the inside of the first groove part 133, and which grips and fastens the concavo-convex image forming die 170 from both surfaces in the vicinity of the one edge 174. Further, the second mounting mechanism 132 comprises a second groove part 134, which has a predetermined depth that extends in the radial direction of the die cylinder 110, and which has a width that is wider than that of the first groove part 133, and one set of second fastening members 136, which is housed in the second groove part 134, and which grips and fastens the concavo-convex image forming die 170 from both surfaces in the vicinity of the other edge 175. Furthermore, the fastening mechanism of the first fastening member 135 and the second fastening member 136 of the mounting mechanism 130 are not particularly limited, and can be fastening mechanisms that make it possible to grip and fasten the vicinity of both edges 174 and 175 of the concavo-convex image forming die 170 in the thickness direction of the concavo-convex image forming die 170, and, for example, can include a fastening mechanism such as a nut and bolt, which are disposed on a pair of a fastening plate and a fastening plate.

The mounting mechanism 130 is configured such that the mounting location of the concavo-convex image forming die 170 relative to the die cylinder 110 is either adjustable or non-adjustable. For example, the above-mentioned mounting location can be made adjustable by making the first mounting mechanism 131 and/or the second mounting mechanism 132 movable.

A gripper mechanism 140 disposed on the die cylinder 110 grips and superposingly fastens a sheet material conveyed to the die cylinder 110 to the concavo-convex image forming surface 171, and, in addition, transports the sheet material by a gripping changeover. The gripper mechanism 140 is disposed between the first mounting mechanism 131 and the second mounting mechanism 132 inside the second groove part 134 of the second mounting mechanism 132. This gripper mechanism 140 comprises, inside the second groove part 134, a support shaft 141, which extends in the axial direction of the die cylinder 110 and is rotatably supported; a plurality of grippers 142 that are mounted on the support shaft 141 at predetermined intervals; and a controller (not shown in Figs. 2 or 3) for controlling the rotation and stopping of the support shaft 141.

As shown in Figs. 3 and 4(a), the gripper 142 comprises an annular fixed part 143, which the support shaft 141 passes through, and which is fixed to the support shaft 141; and a gripping piece 144, which extends from the fixed part 143, and the tip of which is bent. The angle of the bend at the tip of the gripping piece 144, as shown in Fig. 4 (b), can be such that at least the tip part of the gripping piece 144 makes contact with the outer circumferential surface of the die cylinder 110 thereby making it possible to fasten a sheet material (indicated by the numeral 52 in Fig. 4 (b)) in collaboration with the die cylinder 110, and can be arbitrarily adjusted taking into account the outside diameter of the die cylinder 110, and the thickness of the sheet material. The grippers 142 are mounted on the support shaft 141 at predetermined intervals. Specifically, as will be explained hereinbelow, the grippers 142 are mounted on the support shaft 141 so as to be alternately positioned relative to the grippers of a gripper mechanism disposed in the cylinder 116 adjacent to the die cylinder 110.

In the concavo-convex image forming unit 100, the number of concavo-convex image forming dies 170, mounting mechanisms 130 and gripper mechanisms 140 mounted to the die cylinder 110 is decided by taking into account the outside diameter of the die cylinder 110, and the outside diameter of the cylinder adjacent to the die cylinder 110. For example, when the outside diameter of the cylinder 116 adjacent to the die cylinder 110 is two times the outside diameter of the die cylinder 110 as shown in Fig. 1, (a set of) one concavo-convex image forming die 170, one mounting mechanism 130 and one gripper mechanism 140 are mounted to each cylinder 110 as shown in Figs. 2 and 3.

The resin feeding mechanism 150 of the concavo-convex image forming unit 100, as shown in Fig. 1, can be a configuration that makes it possible to feed a photo curable resin onto the concavo-convex image forming surface 171 (in other words, and concavo-convex pattern 173, which is not shown in Fig. 1) of the concavo-convex image forming die 170 mounted to the die cylinder 110, and, for example, comprises a resin storage part 151 for storing the photo curable resin, and a feed roller 152 for feeding the photo curable resin from the resin storage part 151 onto the concavo-convex image forming surface 171 of the concavo-convex image forming die 170. This feed roller 152, for example, is arranged so as to make either touch-contact or pressure-contact with the concavo-convex image forming surface 171, and, in addition, rotates in the direction indicated by the solid-line arrow of Fig. 1, a portion of the outer circumferential surface is dipped into the resin storage part 151 in which a photo curable resin of either a liquid or melt-softened state is stored, and carries the photo curable resin. Furthermore, the configuration of the resin storage part 151 is not particularly limited, and, for example, can include a configuration comprising a resin storage tank and heating means for heating the resin storage tank. Further, the configuration of the feed roller 152 is not particularly limited, and, for example, the feed roller 152 can comprise heating means on the inside thereof, and can also comprise a fluid scraping blade.

The resin feeder 150 should be arranged such that it is possible to feed the photo curable resin onto the concavo-convex image forming surface 171 prior to the gripper mechanism 140 fastening a sheet material to the concavo-convex image forming surface 171. In the present invention, "the gripper mechanism 140 fastens a sheet material to the concavo-convex image forming surface 171" signifies that "the gripper 142 of the gripper mechanism 140 grips one edge of the sheet material", and does not signify that "the gripper mechanism 140 fastens the entire surface of the sheet material to the concavo-convex image forming surface 171". Therefore, the photo curable resin can be fed onto the concavo-convex image forming surface 171 either while or at the same time as the entire surface of the sheet material is being fastened to the concavo-convex image forming surface 171 by the gripper mechanism 140. For example, as shown in Fig. 1, the resin feeder 150 is arranged to feed resin either prior to or simultaneous with the sheet material being transported from the cylinder 116 positioned adjacent to the die cylinder 110, that is, on the upstream side of either the closest approach location or the touch-contact location of the die cylinder 110 and the above-mentioned cylinder 116 relative to the direction of rotation of the die cylinder 110. In other words, as shown in Fig. 1, the resin feeder 150 is arranged beneath the die cylinder 110 in Fig. 1 on the sheet material non-conveyance route side of the die cylinder 110.

The impression cylinder 115 of the concavo-convex image forming unit 100 brings the sheet material conveyed to the die cylinder 110 in close contact with the concavo-convex image forming surface 171. When the concavo-convex image forming unit 100 comprises an impression cylinder 115, it is possible to bring the photo curable resin fed onto the concavo-convex image forming surface 171 by the resin feeder 150 in close contact with the sheet material, thereby allowing the concavo-convex image being formed to firmly adhere to the sheet material and making it difficult for the concavo-convex image to peel away from the image formed matter. The outside diameter of this impression cylinder 115 is not particularly limited, and can be larger or smaller than, or the same size as that of the die cylinder 110.

The impression cylinder 115 should be arranged so that it is possible to bring the sheet material into close contact with the concavo-convex image forming surface 171 after the gripper mechanism 140 has fastened the sheet material to the concavo-convex image forming surface 171. Therefore, the impression cylinder 115 should be arranged so as to bring the sheet material into close contact with the concavo-convex image forming surface 171 from the part of the sheet material that is fastened to the concavo-convex image forming surface 171 either while or simultaneous to the entire surface of the sheet material being fastened to the concavo-convex image forming surface 171 by the gripper mechanism 140. For example, as shown in Fig. 1, the impression cylinder 115 is arranged to make close contact either subsequent to or simultaneous with the sheet material being transported from the cylinder 116, that is, on the downstream side of either the closest approach location or the touch-contact location of the die cylinder 110 and the above-mentioned cylinder 116 relative to the direction of rotation of the die cylinder 110. In other words, as shown in Fig. 1, the impression cylinder 115 is above the die cylinder 110 in Fig. 1 on the sheet material conveyance route side of the die cylinder 110, and is arranged on the upstream side of light emitting means 160, which will be explained hereinbelow, either in the proximity of the die cylinder 110 so that a gap smaller than the thickness of the sheet material is formed, or to make touch-contact or pressure-contact with the die cylinder 110.

The light emitter 160 of the concavo-convex image forming unit 100 should be configured so as to make it possible to emit light from the surface side of the sheet material onto the photo curable resin that has been fed onto the concavo-convex image forming surface 171, and, for example, can include a configuration comprising a light-generating source for emitting light and a reflecting plate. Here, the light emitted from the light emitter is light (of course, comprising ultraviolet radiation) having a wavelength ranging from greater than roughly 10 nm to less than 1 mm, and of the light that has a wavelength in this range, ultraviolet radiation having a wavelength ranging from roughly 10 nm to 500 nm is preferable, and ultraviolet radiation having a wavelength ranging from roughly 200 nm to 500 nm is more preferable. In this example, as shown in Fig. 1, the light emitter 160, specifically, is arranged above the die cylinder 110, and comprises an ultraviolet lamp 161 that emits ultraviolet radiation from the sheet material side toward to concavo-convex image forming die 170 mounted to the outer circumferential surface of the die cylinder 110; and a reflecting plate 162 that surrounds the ultraviolet lamp 161 and reflects the ultraviolet radiation emitted from the ultraviolet lamp 161 toward the die cylinder 110.

The light emitter 160 should be arranged so as to make it possible to emit light in a state in which the sheet material and the concavo-convex image forming surface 171 are in close contact. For example, as shown in Fig. 1, the light emitter 160 is arranged to emit light while the state in which the sheet material and concavo-convex image forming surface 171 are in close contact is being maintained, that is, on the downstream side of the impression cylinder 115 relative to the direction of rotation of the die cylinder 110. In other words, as shown in Fig. 1, the light emitter 160 is arranged on the sheet material conveyance route side of the die cylinder 110, away from the die cylinder 110 on the downstream side of the impression cylinder 115.

In this concavo-convex image forming unit 100, the light emitter is configured so as to emit light having the above-mentioned wavelength range, but in the present invention, for example, when an ionizing radiation-curable resin is fed onto the concavo-convex image forming surface 171, an ionizing radiation emitter that emits electron radiation instead of light can be employed.

A concavo-convex image forming unit 101, which is another embodiment of the concavo-convex image forming unit related to the present invention will be explained by referring to the figures. As shown in Fig. 6, this concavo-convex image forming unit 101 is characterized by comprising a die cylinder 111, which has a concavo-convex image forming die (not shown in Fig. 6) mounted to the outer circumferential surface; a resin feeder 150; an impression cylinder 115; and a light emitter 160. This concavo-convex image forming unit 101, as shown in Fig. 6, is basically configured the same as the concavo-convex image forming unit 100 with the exception that the outside diameter of the die cylinder 111 is adjusted so that the outside diameter of the cylinder 116 adjacent to the die cylinder 111 is the same as that of the outside diameter of the die cylinder 111, and, in accordance with this outside diameter, two each (two sets) of concavo-convex image forming die 170, mounting mechanisms 130 and gripper mechanisms 140 (none of which are shown in Fig. 6) are mounted at equal intervals (that is, on opposite sides of the outer circumferential surface of the die cylinder 111) on the outer circumferential surface of the die cylinder 111.

Next, using the above-mentioned concavo-convex image forming unit 100 as an example, a concavo-convex image forming method related to the present invention will be explained together with the functions of the concavo-convex image forming unit 100 by referring to the figures. Furthermore, needless to say, the concavo-convex image forming method related to the present invention can also be implemented using the above-mentioned concavo-convex image forming unit 101.

A concavo-convex image formed matter produced by the concavo-convex image forming method related to the present invention is a concavo-convex image formed matter made by a concavo-convex image being formed on either the entire surface of one side of a sheet member as a sheet material, or on a portion thereof. In the present invention, the concavo-convex image should be a concavo-convex image that has a concavo-convex shape, and a concavo-convex image having a concavo-convex shape with a height of not less than 1 µm but not greater than 2 mm is preferable from the standpoint of making it possible to adeptly achieve the objects of the present invention. Furthermore, the sequence pattern of convex parts of the concavo-convex image is not particularly limited, and an arbitrary sequence pattern can be selected as desired.

A concavo-convex image formed matter with such a concavo-convex image being formed, for example, can be a lens sheet on which a lenticular lens is formed as the concavo-convex image, a lens sheet on which a microarray lens is formed as the concavo-convex image, a hologram sheet on which a hologram pattern is formed as the concavo-convex image, a relief image sheet on which a relief image is formed as the concavo-convex image, or Braille printed matter on which Braille is formed as the concavo-convex image.

A lens sheet 50 on which a microarray lens is formed, as shown in Fig. 7, is an aggregate of convex lenses comprising a sheet member 52; and a plurality of convex lenses 55 on either the entire surface or a portion thereof of the one surface 53 of the sheet member 52, and focuses either on the other surface 54 or on the same plane in the posterior direction relative to this surface 54.

The sheet member 52 can be constituted from one sheet, or from a plurality of sheets. The thickness of the sheet member 52 is substantially the same length as the focal distance of a convex lens 55, or a length shorter than the above-mentioned focal distance. The thickness of the sheet member 52 is normally adjusted to between 0.1 and 1.0 mm depending on the focal distance of the convex lens 55, and preferably is adjusted to between 0.1 and 0.8 mm. The shape of the sheet member 52 can be a shape capable of supporting the convex lens 55, and, for example, can be a planar shape, a curved shape, or a plate of an arbitrary concavo-convex shape.

In the lens sheet 50, a plurality of convex lenses 55 respectively are comprised of microarray lenses, and the array of the convex lenses 55 can be a honeycomb-shaped array in which the plurality of convex lenses 55 are arranged so as to constitute the core of a closely arranged regular hexagon, a not-shown square-shaped array in which the plurality of convex lenses are arranged so as to constitute a vertically and horizontally arranged regular hexagon, or a square-shaped array in which the plurality of convex lenses 55 are arranged so as to constituted a vertically and horizontally arranged regular hexagon rotated 45 degrees.

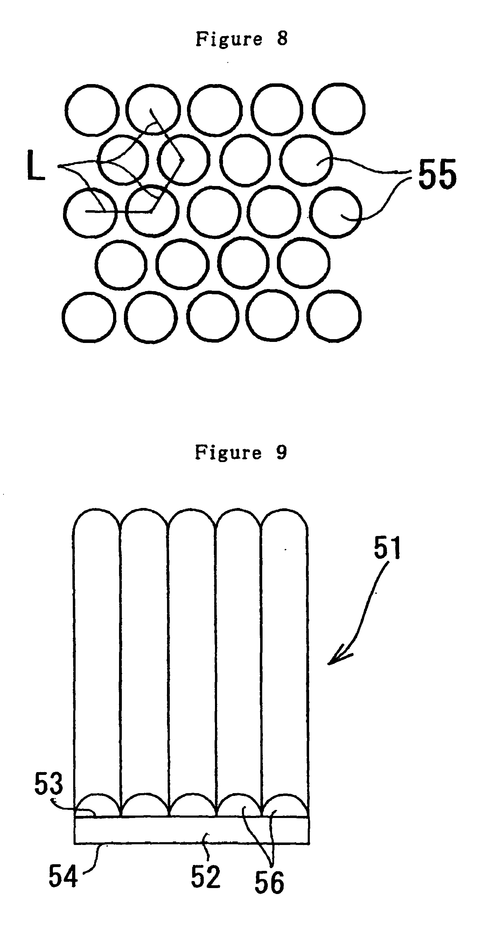

The array intervals between the convex lenses 55 can be either equal intervals or different intervals, and are not particularly limited. The array interval L (refer to Fig. 8) of the convex lenses 55, for example, can be around 0.1 to 1.2 mm, and around 0.12 to 0.42 mm is particularly good. The array interval of the convex lenses 55 refers to the distance from an arbitrary location in a certain convex lens 55 to a location corresponding to the above-mentioned arbitrary location in a convex lens 55 adjacent thereto. The height of the convex lens 55 can be that by which a light incident on the convex lens 55 is focused on either the other surface 54 of the sheet member 52, or the same plane in the posterior direction relative to this surface 54, and, for example, is equal to or greater than 1 µm but equal to or less than 2 mm, and to be able to be used suitably in a stereoscopic IP sheet, which will be explained hereinbelow, is between 5 and 500 µm.

By contrast, as shown in Fig. 9, a lens sheet 51 in which a lenticular lens is formed is an aggregate of convex lenses comprising a sheet member 52; and a plurality of convex lenses, which extends in one direction on either the entire surface or a portion thereof of the one surface 53 of the sheet member 52, and focuses on either the other surface 54 or on the same plane in the posterior direction relative to this surface 54. The sheet member 52 is configured basically the same as the sheet member 52 of the above-mentioned lens sheet 50.

In the lens sheet 51, the plurality of convex lenses 56 make a lenticular lens, and, as shown in Fig. 9, the individual convex lenses 56 are arrayed parallel with one another. The array interval between the convex lenses 56 can be either equal intervals or different intervals, and is not particularly limited. The array interval of the convex lenses 56, for example, can be around 0.1 to 1.2 mm, and the height of the convex lens 56 can be that by which a light incident on the convex lens 56 is focused on either the other surface 54 of the sheet member 52, or the same plane in the posterior direction relative to this surface 54, and is equal to or greater than 1 µm but equal to or less than 2 mm, and to be able to be used suitably in a stereoscopic lenticular sheet, which will be explained hereinbelow, is between 5 and 500 µm.

One example of a concavo-convex image forming method related to the present invention that uses the concavo-convex image forming unit 100 (hereinafter, referred to as an example of a concavo-convex image forming method related to the present invention) is characterized by having a step for mounting onto the outer circumferential surface of a die cylinder 110 having a gripper mechanism 140 a concavo-convex image forming die 170 that has a concavo-convex image forming surface 171 and a mounting surface 172 such that this concavo-convex image forming surface 171 is on the outer side; a step for feeding a photo curable resin onto the concavo-convex image forming surface 171; a step for bringing a sheet material, which has been superposingly fastened to the concavo-convex image forming surface 171 in close contact with the concavo-convex image forming surface 171; and a step for emitted a light from the sheet material side in a state in which the sheet material and the concavo-convex image forming surface 171 are in close contact.

In the example of a concavo-convex image forming method related to the present invention, first, a sheet member 52 is prepared as the sheet material. Since a light is emitted by a light emitter 160 of the concavo-convex image forming unit 100 from the back surface of the sheet member 52, the properties of the sheet member 52 must be such that light is transmitted through the sheet member 52. Such materials include light-transmitting synthetic resins and biodegradable resins, and specifically, include polylactic acid (PLA), methacrylic resin, polycarbonate resin, vinyl chloride resin, polystyrene resin, polyester resins like polyethylene terephthalate (PET), polyolefin resins like polypropylene (PP), and other transparent materials that are composites thereof. Of these, polypropylene (PP), polyethylene terephthalate (PET) and polylactic acid (PLA), which is a plant-derived resin, are particularly suitable. As used here, "transparent" signifies that the material has transparency to the extent that it is capable of transmitting light, and encompasses such concepts as transparent and colorless, translucent, transparent and chromatic, translucent and chromatic. The sheet member 52 is adjusted to the desired thickness and size depending on the light-transmitting materials that are described hereinbelow.

In the example of the concavo-convex image forming method related to the present invention, the concavo-convex image forming die 170 is prepared. A concavo-convex pattern 173 is formed on either the entire or a portion of the one surface of the concavo-convex image forming die 170. The concavo-convex pattern 173 is formed by taking into account the outside diameter of the die cylinder 110 so as to constitute the concavo-convex image to be formed on the sheet member 52 and the complementary concavo-convex shape. For example, in making the concavo-convex image forming die 170 for forming the lens sheet 50 shown in Fig. 7, a concavo-convex pattern 173 in which concave parts respectively corresponding to the plurality of convex lenses 55 are arrayed the same as the convex lenses 55 can be formed on the concavo-convex image forming surface 171. This concavo-convex image forming die 170, for example, is made of a material such as a resin, rubber or metal using various types of forming methods and metal processing methods.

Next, the concavo-convex image forming die 170 manufactured like this is mounted to the outer circumferential surface of the die cylinder 110 by the mounting mechanism 130 so that this concavo-convex image forming surface 171 constitutes the outer side. That is, the vicinity of the one edge 174 of the concavo-convex image forming die 170 is gripped by the first fastening member 135, and, similarly, the vicinity of the other edge 175 of the concavo-convex image forming die 170 is gripped by the second fastening member 136, and next, the concavo-convex image forming die 170, which is being gripped by the first fastening member 135 and the second fastening member 136, is pulled by applying tensile force in the circumferential direction of the die cylinder 110, and is fastened to the outer circumferential surface of the die cylinder 110. By so doing, the concavo-convex image forming die 170 can be mounted to the die cylinder 110, which comprises both the mounting mechanism 130 and the gripper mechanism 140, so as to constitute the above-mentioned state as shown in Figs. 2 and 3.

In the example of the concavo-convex image forming method related to the present invention, next, the prepared sheet member 52 is set in the feeder (The feeder, which is not shown in Fig. 1, is set the furthest upstream of the concavo-convex image forming unit 100.) of the concavo-convex image forming unit 100 comprising the die cylinder 110, and, for example, transports the sheet member 52 to the die cylinder 110 using sheet transporting means (for example, a gripper mechanism-equipped cylinder 116) comprising a gripper mechanism.

In the example of the concavo-convex image forming method related to the present invention, a photo curable resin is fed onto the concavo-convex image forming surface 171 by the resin feeder 150 either during or prior to the sheet member 52 being transported to the die cylinder 110, in other words, prior to one edge of the sheet member 52 being gripped by the grippers 142. That is, as shown in Fig. 1, the feed roller 152 is rotated in synch with the die cylinder 110, thereby dipping a portion of the outer circumferential surface thereof into the resin storage part 151, the photo curable resin is carried on the outer circumferential surface of the feed roller 152, and the carried photo curable resin is fed to the concavo-convex image forming surface 171. In this way, the concavo-convex image forming surface 171 is saturated with the photo curable resin.

The photo curable resin fed to the concavo-convex image forming die 170 by the resin feeder 150, for example, can be the same transparent material as the resin that forms the sheet member 52, which will be described hereinbelow. This photo curable resin is not particularly limited, and a known photo curable resin can be used. For example, either the above-mentioned resins, which transmit light, or a resin composition that comprises a known ultraviolet-curable resin and a curing agent can be used.

In the example of the concavo-convex image forming method related to the present invention, next, one edge of the sheet member 52, which, for example, is conveyed from the cylinder 116, is gripped by the grippers 142 and superposingly fastened to the concavo-convex image forming surface 171 in accordance with the rotation of the die cylinder 110. Next, the sheet member 52, which has been superposingly fastened to the concavo-convex image forming surface 171 in synch with the rotation of the die cylinder 110, is brought into close contact with the concavo-convex image forming surface 171 by the impression cylinder 115. That is, by passing the concavo-convex image forming die 170 and sheet member 52 between the impression cylinder 115 and the die cylinder 110 through the continuous rotation of the die cylinder 110, the concavo-convex image forming surface 171 and sheet member 52 make close contact.

In the example of the concavo-convex image forming method related to the present invention, next, a light is emitted from the sheet member 52 side in a state in which the sheet member 52 and the concavo-convex image forming surface 171 are in close contact. The light emission is carried out by a light emitter 160, which is arranged in proximity to the impression cylinder 115, and on the downstream side in the direction of rotation of the die cylinder 110. That is, the concavo-convex image forming die 170 and sheet member 52 pass between the impression cylinder 115 and the die cylinder 110 while making close contact, and through the rotation of the die cylinder 110, the sheet member 52 and the concavo-convex image forming die 170 pass near the light emitter 160, which is emitting light. At this time, the light of the ultraviolet radiation that is being emitted from an ultraviolet lamp 181 passes through the sheet member 52 from the other surface 54 of the sheet member 52, and is incident on the photo curable resin that has been fed to the concavo-convex pattern 173. In so doing, the photo curable resin is cured as the close contact state of the sheet member 52 and the concavo-convex image forming surface 171, and, in addition, the shape of the concavo-convex pattern 173, which has been formed on the concavo-convex image forming die 170, are maintained as it is. As a result of this, the initial shape of the concavo-convex pattern 173 is maintained until the photo curable resin is cured even when the photo curable resin is in a liquid state or a melt-softened state. Then, the concavo-convex image forming surface 171 of the concavo-convex image forming die 170 is formed so as to constitute the desired concavo-convex image when planar. The concavo-convex image formed matter is produced in this way.

The concavo-convex image forming units 100 and 101 related to the present invention, and the concavo-convex image forming method related to the present invention make it possible to emit light onto a photo curable resin from the surface side of a sheet member 52 that has been superposingly fastened to the concavo-convex image forming surface 171 in a state in which the photo curable resin is in close contact with the sheet member 52. As a result of this, the shape of the concavo-convex image forming surface 171 is maintained until the photo curable resin is cured, thereby making it possible to form a concavo-convex image of a desired shape on the surface of a sheet member 52 in a firm state of close contact.

In particular, the concavo-convex image forming units 100 and 101 related to the present invention and the concavo-convex image forming method related to the present invention make it possible to manufacture a concavo-convex image formed matter in which a plurality of concavo-convex images having a height of not less than 1 µm but not more than 2 mm is formed in a predetermined array, for example, a lens sheet 51 in which a plurality of lenticular lenses 56 having a height of not less than 1 sun but not more 2 mm is formed, or a lens sheet 50 in which a microarray lens 55 having a height of not less than 1 µm but not more 2 mm is formed, without losing the shape of the concavo-convex image (convex lenses 55, 56) that are firmly in contact with the sheet member 52.

Furthermore, in a conventional lens sheet, lenses are formed on the entire surface of the sheet member 52, but in a lens sheet 50 or a lens sheet 51, which is manufactured with the concavo-convex image forming units 100 and 101 related to the present invention and by the concavo-convex image forming method related to the present invention, lenses 55, 56 of a desired shape can be formed on the entire surface of the sheet member 52 as shown in Figs. 7 and 9, and lenses 55, 56 of a desired shape can also be formed on a portion of the surface of the sheet member 52, which is not possible with a conventional lens sheet.

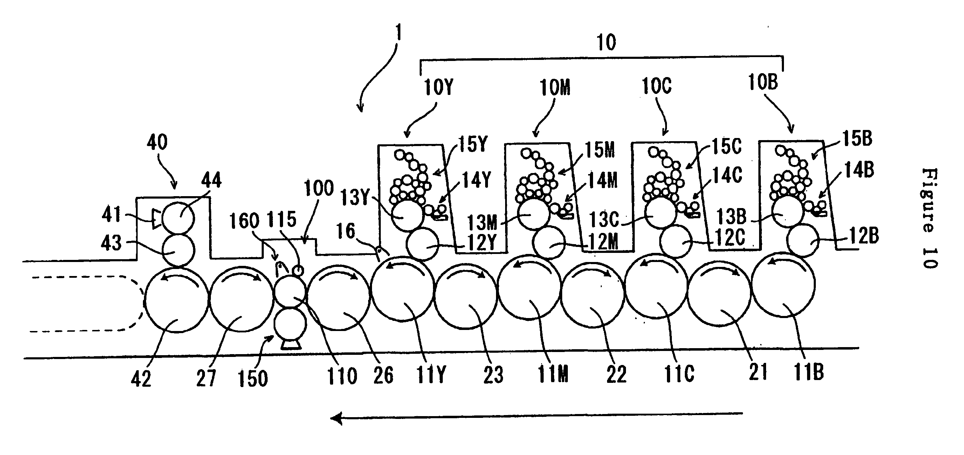

Next, an image forming apparatus 1, which is an embodiment of an image forming apparatus related to the present invention, will be explained by referring to the figures. This image forming apparatus 1, as shown in Fig. 10, is characterized by comprising a planar image forming unit group 10, which comprises gripper mechanisms that fasten a sheet material to a cylinder, and also transport the sheet material; a concavo-convex image forming unit 100; and sheet material transporting means 26 for transporting a sheet material from a yellow image forming unit 10Y to the concavo-convex image forming unit 100 by a gripping changeover in the gripper mechanism.

As shown in Fig. 10, in this image forming apparatus 1, the planar image forming unit group 10 and the concavo-convex image forming unit 100 are directly (in-line) connected via the sheet material transporter 26, in other words, are sequentially connected by virtue of a gripping changeover in the gripper mechanism. Then, in the image forming apparatus 1, the planar image forming unit group 10 is arranged on the upstream side (prior step) of the concavo-convex image forming unit 100 relative to the direction of transport of the sheet material (the direction of the arrows in Fig. 10).

The planar image forming unit group 10, which makes up the image forming apparatus 1, comprises four planar image forming units 10B, 10C, 10M and 10Y, which form planar images on a sheet material, and intermediate cylinders 21, 22, 23 disposed therebetween, and forms a color planar image comprising planar images of four colors on the surface of the sheet material.

As shown in Fig. 10, in the planar image forming unit group 10, a black image forming unit 10B that forms a black image, a cyan image forming unit 10C that forms a cyan image, a magenta image forming unit 10M that forms a magenta image, and a yellow image forming unit 10Y that forms a yellow image are arranged approximately horizontally from the upstream side of the direction of conveyance of the sheet material via practically horizontal intermediate cylinders 21, 22 and 23. Then, as will be described hereinbelow, the respective image forming units 10B, 10C, 10M and 10Y, as well as the respective intermediate cylinders 21, 22 and 23 comprise gripper mechanisms 30 (not shown in Fig. 10).

The black image forming unit 10B, which is a member of the planar image forming unit group 10, comprises an impression cylinder 11B that conveys the sheet material as shown in Fig. 10; a blanket cylinder 12B, which is arranged thereabove so as to make touch-contact with the impression cylinder 11B; a plate cylinder 13B, which is arranged thereabove so as to make touch-contact with the blanket cylinder 12B; a water feeding mechanism 14B, which is arranged thereabove so as to make touch-contact with the plate cylinder 13B, and which feeds water to the plate cylinder 13B; and an ink feeding mechanism 15B, which is arranged thereabove so as to make touch-contact with the plate cylinder 13B, and which feeds black ink to the plate cylinder 13B. In this black image forming unit 10B, the impression cylinder 11B and the blanket cylinder 12B make pressure-contact so that the black image formed on the blanket cylinder 12B is transferred to the surface of the sheet material.

A gripper mechanism 30 (not shown in Fig. 10) for gripping one edge of the sheet material and fastening the sheet material to the impression cylinder 11B, and, in addition, transporting this sheet material to the intermediate cylinder 21, is mounted on the impression cylinder 11B of the black image forming unit 10B. The gripper mechanism 30 mounted on the impression cylinder 11B, in collaboration with the adjacent intermediate cylinder 21, can transport the sheet material to the adjacent intermediate cylinder 21 without changing the relative gripping locations of the gripper mechanisms 30 on the gripped sheet material. The gripper mechanism 30 disposed on the impression cylinder 11B is configured basically the same as the above-mentioned gripper mechanism 140.

In the black image forming unit 10B, a known conventional configuration can be arbitrarily used for the impression cylinder 11B, blanket cylinder 12B, plate cylinder 13B, water feeding mechanism 14B and ink feeding mechanism 15B, and the arrangement thereof can also arbitrarily employ a known conventional arrangement.

As shown in Fig. 10, the cyan image forming unit 10C, magenta image forming unit 10M, and yellow image forming unit 10Y, which make up the planar image forming unit group 10, are configured basically the same as the black image forming unit 10B, with the exception that the ink fed from the ink feeder 15C, 15M and 15Y are respectively cyan ink, magenta ink and yellow ink.

In the planar image forming unit group 10, all of the intermediate cylinders 21, 22 and 23, which are arranged between the respective image forming units 10B, 10C, 10M and 10Y, comprise gripper mechanisms 30 (not shown in Fig. 10), and transport the sheet material in collaboration with the adjacent respective impression cylinders. All of these intermediate cylinders 21, 22 and 23 can arbitrarily use a known conventional configuration.

As shown in Fig. 10, in the planar image forming unit group 10, all of the impression cylinders 11B, 11C, 11M and 11Y rotate in the same direction (left rotation in Fig. 10), and all of the intermediate cylinders 21, 22 and 23 rotate in the same direction (right rotation in Fig. 10). That is, the respective adjacent cylinders mutually rotate in opposite directions. Then, all of the impression cylinders 11B, 11C, 11M and 11Y, as well as all of the intermediate cylinders 21, 22 and 23 are mutually synchronized to the adjacent cylinders, that is, these impression cylinders 11B, 11C, 11M and 11Y, as well as the intermediate cylinders 21, 22 and 23 all rotate in synch with one another. Further, all the impression cylinders 11B, 11C, 11M and 11Y, as well as the intermediate cylinders 21, 22 and 23 are adjusted to twice the size (outside diameter length) of the plate cylinders 13B, 13C, 13M and 13Y. Furthermore, in the present invention, all of the impression cylinders and intermediate cylinders do not have to be formed in the same size, and, for example, the respective impression cylinders and intermediate cylinders can have sizes that are n-times (n being a positive integer) that of the plate cylinders.

Thus, the gripper mechanism 30-equipped plate cylinders 11B, 11C, 11M and 11Y and the gripper mechanism 30-equipped intermediate cylinders 21, 22 and 23 being alternately arranged, the rotations thereof being synchronized, and the one edge of the sheet material undergoing a gripping changeover in the gripper mechanism 30 make it possible for the sheet material to be sequentially transported to the yellow image forming unit 10Y by way of the black image forming unit 10B, intermediate cylinder 21, cyan image forming unit 10C, intermediate cylinder 22, magenta image forming unit 10M, and intermediate cylinder 23 without changing the relative gripping locations of the gripper mechanisms 30 on the sheet material that had been gripped by the gripper mechanism 30 of the impression cylinder 11B. The transport of the sheet material by the gripper mechanisms 30 is basically the same as the example described hereinbelow.

In the planar image forming unit group 10, as shown in Fig. 10, an ink drier 16 is disposed above the impression cylinder 11Y of the yellow image forming unit 10Y. This ink drier 16 can be means that make it possible to dry a planar image subsequent to the yellow image having been formed. For example, when the ink is ultraviolet-cured type ink, as the ink drier 16, an ultraviolet radiation emitter (for example, an ultraviolet lamp or the like), which emits ultraviolet radiation or the like toward the conveyance route of the sheet material (specifically, the surface of the impression cylinder 11Y) in the downstream direction from the touch-contact part of the impression cylinder 11Y and blanket cylinder 12Y as shown in Fig. 10, is preferably used.

A sheet material transporter 26, which an element of the image forming apparatus 1, is adjacently arranged to the impression cylinder 11Y of the yellow image forming unit 10Y and the die cylinder 110 (the concavo-convex image forming die 170 mounted on the die cylinder 110) of the concavo-convex image forming unit 100 as shown in Fig. 10, and transports the sheet material from the planer image forming unit group 10Y to the concavo-convex image forming unit 100. In the image forming apparatus 1, the sheet material transporter 26 is treated as an intermediate cylinder 26 that comprises a gripper mechanism 30 (not shown in Fig. 10), which grips one edge of the sheet material and fastens the sheet material, and also transports this sheet material. This intermediate cylinder 26 is configured basically the same as the respective intermediate cylinders 21 to 23, and rotates in synch with the impression cylinders 11 in the same direction as these intermediate cylinders 21 to 23.

This gripper mechanism 30 can grip one edge of the sheet material that has been transported from the impression cylinder 11Y by way of the respective impression cylinders 11B, 11C and 11M, as well as the respective intermediate cylinders 21, 22 and 23, and can convey the sheet material on which a planar image has been formed to the die cylinder 110 without changing the relative gripping locations of the gripper mechanisms on the sheet material that had been gripped by the gripper mechanism 30 of the black image forming unit 10B. The gripper mechanisms 30 mounted on the respective image forming units 10B, 10C, 10M and 10Y, the respective intermediate cylinders 21, 22, and 23, and the intermediate cylinder 26 are configured basically the same as the above-mentioned gripper mechanism 140 shown in Figs. 2 and 3.

The respective grippers 32 of these gripper mechanisms 30 are mounted on a support shaft 31 such that either grippers 32 or 142, which are mounted on a cylinder that is adjacent to the cylinder on which these grippers 32 are mounted do not oppose one another. For example, the grippers 32 of the intermediate cylinder 26 are mounted onto support shaft 31 at predetermined intervals such that the grippers 32 of the impression cylinder 11Y and the grippers 142 of the die cylinder 110 (refer to Fig. 11) adjacent thereto are not opposed. Thus, the grippers 32 of a certain cylinder are mounted to the support shaft 31 at predetermined intervals so as to be in alternate locations relative to either the grippers 32 or 142 of the cylinder adjacent thereto when delivering the sheet material.

The concavo-convex image forming unit 100 that is an element of the image forming apparatus 1 is configured basically the same as the above-mentioned concavo-convex image forming unit 100, and the rotation of the die cylinder 110 is synchronized to that of the intermediate cylinder 26. Then, the die cylinder 110 is adjacently arranged to the intermediate cylinder 26 as shown in Fig. 10, and is adjusted to the same diameter as the plate cylinders 13B, 13C, 13M and 13Y. Therefore, the number of gripper mechanisms 140 and mounting mechanisms 130 mounted to the die cylinder 110 is half the number of gripper mechanisms 30 mounted to the intermediate cylinder 26. In this image forming apparatus 1, specifically, one gripper mechanism 140 and one mounting mechanism 130 are mounted to the die cylinder 110, and two gripper mechanisms 30 are mounted to the intermediate cylinder 26 so as to be at equal intervals on the outer circumferential surface of the intermediate cylinder 26 (that is, on opposite sides of the outer circumferential surface of the intermediate cylinder 26).

In the image forming apparatus 1, the installation position of the die cylinder 110 is adjusted such that the forming location of the concavo-convex image formed by the concavo-convex image forming die 170 and the forming location of the planar image formed on the sheet material conveyed to the concavo-convex image forming unit 100 match, that is, so that the planar image and the concavo-convex image are registered. That is, the longitudinal direction (circumferential direction of the die cylinder 110), lateral direction (axial direction of the die cylinder 110) and tilt (direction of the center line of the concavo-convex image forming die 170 relative to the circumferential direction of the die cylinder 110) of the die cylinder 110 and/or the concavo-convex image forming die 170 are arbitrarily adjusted depending on the planar image. The adjustment of the forming location of the concavo-convex image can be made possible by adjusting the mounting mechanism 130, but from the standpoint of simplifying the structure and improving the operability of the mounting mechanism 130, it is preferable that the adjustment of the forming location of the concavo-convex image be made possible by adjusting the installation position of the die cylinder 110. The longitudinal direction adjustment of the concavo-convex image forming die 170 can be adjusted by changing the synchronization position of the die cylinder 110 and the intermediate cylinder 26. The adjustment of the forming location of the concavo-convex image is normally finely adjusted so as to achieve highly accurate registration subsequent to forming the planar image and concavo-convex image on the sheet material and checking the accuracy of the registration of these images.

As shown in Fig. 10, the image forming apparatus 1 comprises a sheet material transporter 27, which is adjacent to the die cylinder 110 on the downstream side in the direction of conveyance of the sheet material. This sheet material transporter 27 is configured basically the same as the intermediate cylinder 26.

A surface coating unit 40 that is an element of the image forming apparatus 1 can have a configuration that makes it possible to feed a surface coating agent to the surface of the sheet material on which a planar image has been formed, and applying a coating to the above-mentioned surface. In the image forming apparatus 1, the surface coating unit 40 as shown in Fig. 10 comprises a storage part 41 for storing a surface coating agent; an impression cylinder on which a gripper mechanism 30 (not shown in Fig. 10) is mounted, and which is adjacently arranged to the above-mentioned sheet material transporter 27; a first feed roller 43, which is arranged above the impression cylinder 42 in Fig. 10 on the sheet material conveyance route side of the impression cylinder 42 either in the proximity of or to make touch-contact with the impression cylinder 42, and which feeds a surface coating agent from the storage part 41 to the surface of the sheet material on which the planar image has been formed; and a second feed roller 44, which feeds the surface coating agent from the storage part 41 to the first feed roller 43. The impression cylinder 42 is configured basically the same as the above-mentioned impression cylinders 11B, 11C, 11M and 11Y. The storage part 41 is configured basically the same as the resin storage part 151 of the resin feeder 150, and the first feed roller 43 and second feed roller are configured basically the same as the feed roller 152 of resin feeding means 150.

Thus, the image forming apparatus 1 is in-line and, in addition, is one-pass from impression cylinder 11B to impression cylinder 42.

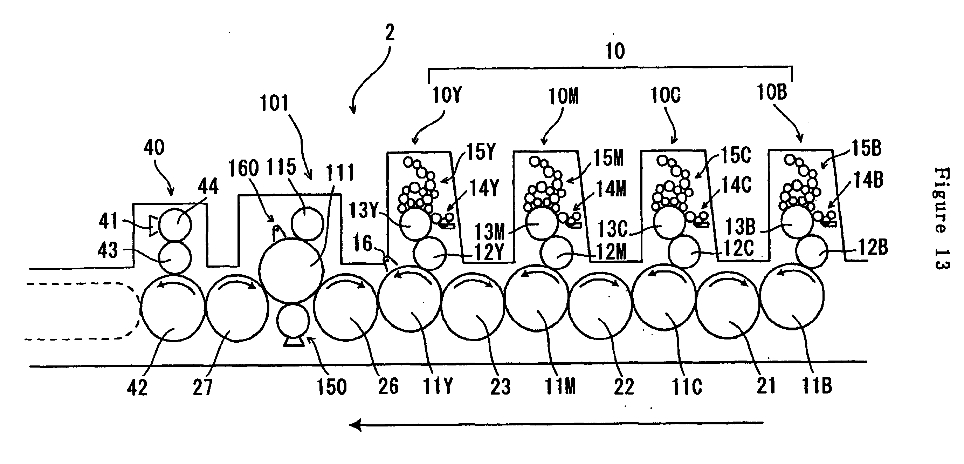

An image forming apparatus 2, which is another embodiment of the image forming apparatus related to the present invention comprises a planar image forming unit group 10; a concavo-convex image forming unit 101; and a sheet material transporter 26 as shown in Fig. 13, and is configured basically the same as the above-mentioned image forming apparatus 1, with the exception that the outside diameter of the die cylinder 111 in the concavo-convex image forming unit 101 is adjusted to twice the outside diameter of the plate cylinders 13B, 13C, 13M and 13Y. Therefore, the number of gripper mechanisms 140 and mounting mechanisms 130 (neither are shown in Fig. 13) mounted to the die cylinder 111 matches the number of gripper mechanisms 30 mounted to the intermediate cylinder 26. Specifically, two gripper mechanisms 140 and two mounting mechanisms 130 are mounted to the die cylinder 111 so as to be at equal intervals on the outer circumferential surface thereof (that is, on the opposite sides of the outer circumferential surface of the die cylinder 111), and two gripper mechanisms 30 are mounted to the intermediate cylinder 26 so as to be at equal intervals on the outer circumferential surface thereof (that is, on opposite sides of the outer circumferential surface of the intermediate cylinder 26).

An image forming apparatus 3, which is yet another embodiment of the image forming apparatus related to the present invention, is characterized by comprising a concavo-convex image forming unit 100; a planar image forming unit group 10; and a sheet material transporter 28 that transports a sheet material from the concavo-convex image forming unit 100 to the planar image forming unit Y through a gripping changeover in the gripper mechanism.

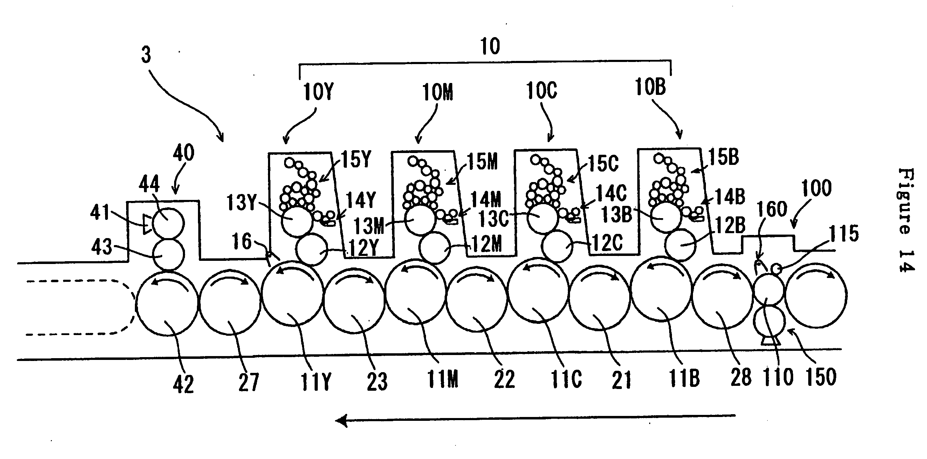

As shown in Fig. 14, in this image forming apparatus 3, the concavo-convex image forming unit 100 and the planar image forming unit group 10 are directly (in-line) connected via a sheet material transporter 28, in other words, are sequentially connected by virtue of a gripping changeover in the gripper mechanism. Then, in the image forming apparatus 3, the concavo-convex image forming unit 100 is arranged on the upstream side (prior step) of the planar image forming unit group 10 relative to the direction of transport of the sheet material. That is, the image forming apparatus 3 is configured basically the same as the above-mentioned image forming apparatus 1 with the exception that arrangements of the concavo-convex image forming unit 100 and the planar image forming unit group 10 differ.

Therefore, the sheet material can be sequentially transported from the die cylinder 110 to the sheet material transporter 28, impression cylinder 11B, intermediate cylinder 21, impression cylinder 11C, intermediate cylinder 22, impression cylinder 11M, intermediate cylinder 23, impression cylinder 11Y, sheet material transporter 27 and impression cylinder 42 without changing the relative gripping locations of the gripper mechanisms 140 on the sheet material that had been gripped by the gripper mechanism 140 mounted to the die cylinder 110 of the concavo-convex image forming unit 100.

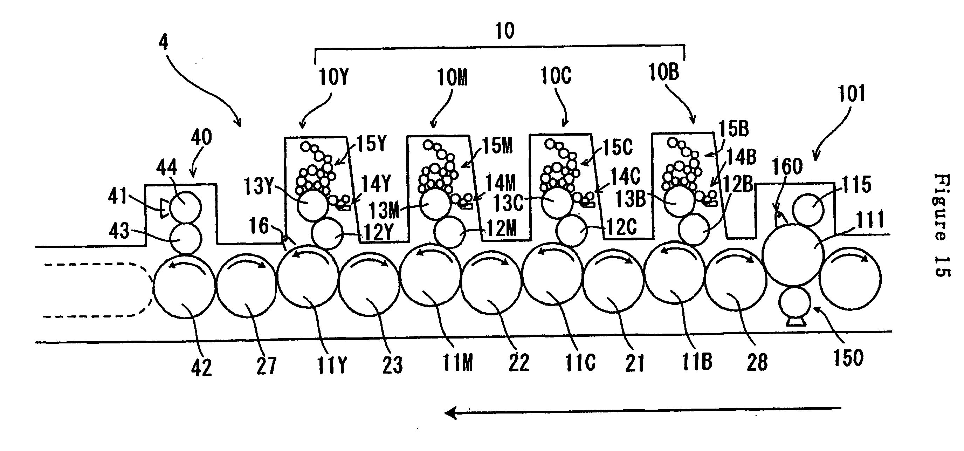

An image forming apparatus 4, which is still yet another embodiment of the image forming apparatus related to the present invention, comprises a planar image forming unit group 10; a concavo-convex image forming unit 101; and a sheet material transporter 28 as shown in Fig. 15, and is configured basically the same as the above-mentioned image forming apparatus 3, with the exception that the outside diameter of the die cylinder 111 in the concavo-convex image forming unit 101 is adjusted to twice the outside diameter of the plate cylinders 13B, 13C, 13M and 13Y.

Next, using image forming apparatuses 1 and 3 as examples, a concavo-convex image forming method related to the present invention will be explained together with the functions of the image forming apparatuses 1 and 3 by referring to the figures. Furthermore, needless to say, the image forming method related to the present invention can also be implemented using the above-mentioned image forming apparatuses 2 and 4.

An image formed matter produced by the image forming method related to the present invention, for example, is a concavo-convex image formed matter made by a concavo-convex image being formed either on the entire surface of the one surface of a sheet member or on a portion thereof, and by a planar image being formed either on the entire surface of the other surface of the sheet member or on a portion thereof. In the present invention, the concavo-convex image is basically the same as the concavo-convex image that was explained for the concavo-convex image forming method related to the present invention.

An image formed matter made by such a concavo-convex image and planar image being formed, for example, can be a stereoscopic IP sheet on which a microarray lens is formed as the concavo-convex image and an IP image is formed as the planar image, a stereoscopic lenticular sheet on which a lenticular lens is formed as the concavo-convex image and a lenticular image is formed as the planar image, a relief image sheet on which a designed relief image is formed as the concavo-convex image and a four-color image aligned to the relief image is formed as the planar image, a hologram sheet on which a full-sheet hologram is formed as the concavo-convex image and a four-color image is formed as the planar image, or a Braille printed matter sheet on which Braille is formed as the concavo-convex image and a four-color image is aligned to the Braille as the planar image.

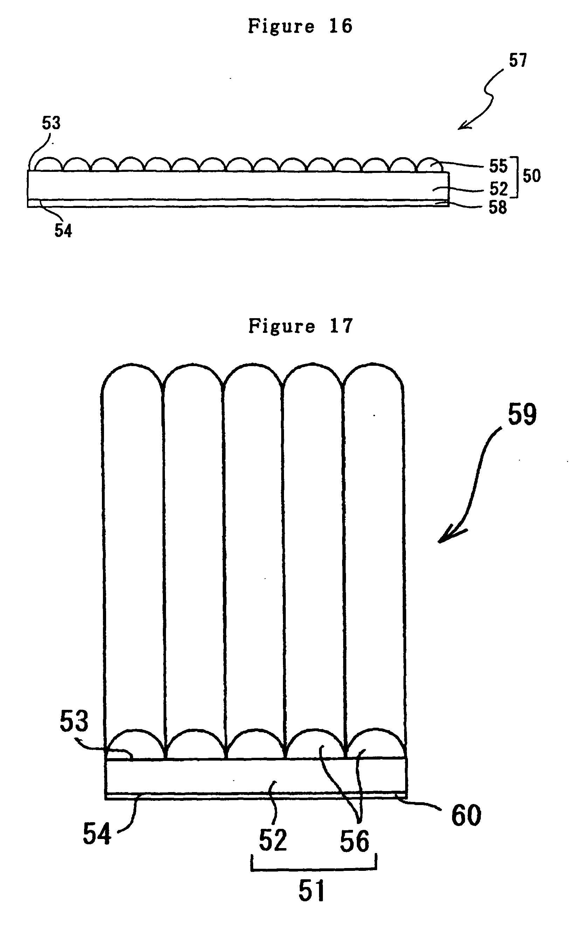

As shown in Fig. 16, a stereoscopic IP sheet 57 comprises a lens sheet (also referred to as an aggregate of convex lenses) 50 on which a plurality of convex lenses 55 that focus on either the entire surface of the one surface 53 or a portion thereof, on the other surface 54, or on the same plane in the posterior direction relative to this surface 54 of the sheet member 52; and an IP image 58 formed either on the entire surface of the other surface 54 of the sheet member 52 or a portion thereof.

The sheet member 52 and the lens sheet 50 are basically the same as the above-mentioned lens sheet 50. The above-mentioned IP image 58 is made in accordance with the image synthesis method. This image synthesis method is well known, and makes it possible to create an IP image 58 using various types of image editing software.

Conversely, as shown in Fig. 17, a stereoscopic lenticular sheet 59 comprises a lens sheet (also referred to as an aggregate of convex lenses) 51 on which a plurality of convex lenses that extend in one direction and focuses on either the entire surface of the one surface 53 or a portion thereof, on the other surface 54, or on the same plane in the posterior direction relative to this surface 54 of the sheet member 52; and a lenticular image 60 formed either on the entire surface of the other surface 54 of the sheet member 52 or a portion thereof.

The sheet member 52 is basically the same as the sheet member 52 of the above-mentioned lens sheet 50, and the lens sheet 51 is basically the same as the above-mentioned lens sheet 51. The lenticular image 60 is made in accordance with the image synthesis method. This image synthesis method is well known, and makes it possible to create the lenticular image 60, using various types of image editing software.

An example of an image forming method related to the present invention (hereinafter referred to as the first image forming method related to the present invention) is characterized by having a step for mounting a concavo-convex image forming die 170, which has a concavo-convex image forming surface 171 and a mounting surface 172, to the outer circumferential surface of a die cylinder 110 with this concavo-convex image forming surface 171 on the outer side; a step for feeding a photo curable resin onto the concavo-convex image forming surface 171; a step for transporting a sheet material on which a four-color planar image has been formed by a planar image forming unit group 10 to the die cylinder 110 through a gripping changeover in the gripper mechanism 30; a step for bringing the sheet material, which has been superposingly fastened to the concavo-convex image forming surface 171, into close contact with the concavo-convex image forming surface 171; and a step for emitting a light from the side of the sheet material in a state in which the sheet material and the concavo-convex image forming surface 171 are in close contact.

In the first image forming method related to the present invention, first, the image forming apparatus 1 shown in Fig. 10 and a sheet member 52 that serves as the sheet material are respectively prepared as described hereinabove. For example, as described above, a concavo-convex image forming die 170 that enables the forming of a microarray lens is prepared, and this concavo-convex image forming die 170 is mounted to the outer circumferential surface of the die cylinder 110 with the concavo-convex image forming surface 171 thereof on the outer side as described hereinabove. At this time, the same as in the above-mentioned concavo-convex image forming method, the arrangement location of the concavo-convex pattern 173 of the concavo-convex image forming die 170 adjusts the position of the die cylinder 110 relative to the forming location of an IP image 58 to be formed on the other surface 54 of the sheet material such that the longitudinal direction (circumferential direction of the die cylinder 110), lateral direction (axial direction of the die cylinder 110) and tilt (deviation of the center line of the concavo-convex image forming die 170 relative to the circumferential direction of the die cylinder 110) match. Then, the respective image forming units 10B, 10C, 10M and 10Y of the planar image forming unit group 10 are set so as to enable the formation of the IP image 58.

In the first image forming method related to the present invention, next, the prepared sheet member 52 is set in a feeder of the image forming apparatus 1 (this feeder, which is not shown in Fig. 10, is installed the furthermost upstream in the image forming apparatus 1), and an IP image 58 is formed on the other surface 54 of the sheet member 52 by the planar image forming unit group 10. The IP image 58 forming method is basically the same as the method for forming an ordinary planar image with the exception that the IP image 58 to be formed is a special image. Specifically, when the sheet member 52 passes between the impression cylinder 11B and the blanket cylinder 12B, a black image is transferred to the other surface 54 of the sheet member 52 from the blanket cylinder 12B on which this black image had been formed, and the black image is formed on the sheet member 52. Similarly, the sheet member 52 on which this black image has been formed sequentially passes between impression cylinder 11C and blanket cylinder 12C, impression cylinder 11M and blanket cylinder 12M, and impression cylinder 11Y and blanket cylinder 12Y, and a color planar image is formed by a cyan image, magenta image and yellow image being superimposed on the black image.

At this time, because all of the impression cylinders 11B, 11C, 11M and 11Y, as well as all of the intermediate cylinders 21, 22 and 23 of the planar image forming unit group 10 comprise gripper mechanisms 30 as described hereinabove, as will be described hereinbelow, the sheet member 52 is transported from impression cylinder 11B to impression cylinder 11Y without changing the relative gripping locations of the gripper mechanisms 30 on the sheet member 52, which had been gripped by the gripper mechanism 30 (not shown in Fig. 10) of the impression cylinder 11B of the planar image forming unit group 10. As a result of this, the black image, cyan image, magenta image and yellow image are formed on the other surface 54 of the sheet member 52 with no deviations in the forming locations, that is, the planar images comprising the respective colors are registered with a high degree of accuracy on the same plane, and a color IP image 58 is formed as a result. In this way, the planar image forming unit group 10 can form a color IP image 58 comprising four highly accurately registered colors on the other surface 54 of the sheet member 52 while conveying the sheet member 52. Furthermore, the transporting of the sheet material by the gripper mechanisms 30 of the planar image forming unit group 10 is basically the same as the transporting of the sheet material from the intermediate cylinder 26 to die cylinder 110, which will be explained hereinbelow.

In the first image forming method related to the present invention, next, the sheet member 52 on which the IP image 58 has been formed is transported from impression cylinder 11Y to intermediate cylinder 26 without changing the relative gripping locations of the grippers 32 by virtue of a gripping changeover in the gripper mechanism 30. Furthermore, the transporting of the sheet material from the impression cylinder 11Y to the intermediate cylinder 26 is basically the same as the transporting from the intermediate cylinder 26 to die cylinder 110, which will be explained hereinbelow.

In the meantime, in the first image forming method related to the present invention, either while the IP image 58 is being formed or while the sheet member 52 on which the IP image has been formed is being transported from the impression cylinder 11Y to the intermediate cylinder 26 as described hereinabove, in other words, prior to the one edge of the sheet member 52 transported to the die cylinder 110 being gripped by the gripper 142 of the die cylinder 110, the photo curable resin is fed onto the concavo-convex image forming surface 171 as described hereinabove.

In the first image forming method related to the present invention, next, the sheet member 52 on which the IP image 58 has been formed is transported through a gripping changeover in the gripper mechanism 30 and 140 from the intermediate cylinder 26 to the die cylinder 110, that is, to the concavo-convex image forming surface 171 of the concavo-convex image forming die 170 onto which the photo curable resin has been saturated. In so doing, the one edge of the sheet member 52 is gripped by the grippers 142 and superposingly fastened by the gripper mechanism 140 to the concavo-convex image forming surface 171 to which the photo curable resin has been fed.

The transporting of the sheet member 52 from the intermediate cylinder 26 to the die cylinder 110 in the first image forming method related to the present invention will be explained below. Furthermore, for ease of understanding, Fig. 12 shows the outside diameters of the intermediate cylinder 26 and the die cylinder 110 as being the same, and does not show the mounting mechanism 130 of the die cylinder 110.

As shown in Fig. 12 (a), the intermediate cylinder 26 grasps the one edge of the transported sheet member 52 from the gripper mechanism 30 of the impression cylinder 11Y with the grippers 32, and fastens this one edge of the sheet member 52 to the outer circumferential surface of the intermediate cylinder 26. When the intermediate cylinder 26 rotates, the die cylinder 110 rotates in the opposite direction in synch with this rotation, and the gripper mechanism 30 of the intermediate cylinder 26 and the gripper mechanism 140 of the die cylinder 110 gradually approach one another. At this time, as shown in Fig. 12 (a), since the grippers 32 are gripping the impression cylinder 11Y together with the sheet member 52, the sheet member 52 is being fastened in a state in which the grippers 32 are making touch-contact via the sheet member 52 with the outer circumferential surface of the impression cylinder 11Y. In the meantime, the grippers 142 are not gripping the sheet member 52, and are therefore in the open state.

When the intermediate cylinder 26 and die cylinder 110 continue to rotate together, as shown in Fig. 12 (b), the edge of the groove part 35 and the edge of the second groove part 134 match. At this time, the plurality of grippers 32 and the plurality of grippers 142 are alternately positioned so as not to oppose one another as shown in Fig. 11.

When the support shaft 141 is rotated by control means (not shown in Fig. 12) in the state in which the edge of the groove part 35 and the edge of the second groove part 134 match, as shown in Fig. 12 (b), the grippers 142 grasp the one edge of the sheet member 52 being gripped by the grippers 32 together with the die cylinder 110 from the opposite direction or the direction that the grippers 32 are gripping. At this time, the sheet member 52 is gripped by the grippers 32 and the grippers 142, and is fastened to the intermediate cylinder 26 and to the die cylinder 110.

In this way, the support shaft 31 is rotated by the controller (not shown in Fig. 12) after the grippers 142 have grasped the sheet member 52, and, as shown in Fig. 12 (c), the grippers 32 separate from the outer circumferential surface of the intermediate cylinder 26, and the sheet member 52 is released. Thus, because the grippers 142 grasp the sheet member 52 before the grippers 32, which are gripping the sheet member 52, release the sheet member 52, the sheet member 52 can be grasped by the grippers 142 of the gripper mechanism 140 without changing the relative gripping location of the gripper mechanism 30, that is, the grippers 32 on the sheet member 52, which had been gripped by the gripper mechanism 30, in particular, the grippers 32 of the intermediate cylinder 26. In this way, the rotation of the die cylinder 110 is synchronized to that of the intermediate cylinder 26, and by the gripping changeover of the one edge of the sheet member 52 by the gripper mechanisms 140 and 30, in particular, the grippers 142 and 30 in collaboration with the intermediate cylinder 26, the sheet member 52 can be transported from the intermediate cylinder 26 without changing the relative gripping locations of the gripper mechanisms 140 and 30, that is, the grippers 142 and 30 on the sheet member 52, which had been gripped by the gripper mechanisms 140 and 30. Thereafter, the intermediate cylinder 26 and die cylinder 110 rotate further, and as shown in Fig. 12 (c), the transporting of the sheet member 52 from the intermediate cylinder 26 to the die cylinder 110 is complete.

The transporting of the sheet member 52 through a gripping changeover in the gripper mechanisms 30 and 140 like this is carried out in the same way between the respective adjacent cylinders, such as the image forming units 10B, 10C, 10M and 10Y, the respective intermediate cylinders 21, 22 and 23, the sheet material transporter 27 and impression cylinder 42. Therefore, the sheet member 52 can be sequentially transported from impression cylinder 11B to intermediate cylinder 21, impression cylinder 11C, intermediate cylinder 22, impression cylinder 11M, intermediate cylinder 23, impression cylinder 11Y, intermediate cylinder 24, die cylinder 110, sheet material transporter 27 and impression cylinder 42 without changing the relative gripping locations of the gripper mechanisms 30 on the sheet member 52, which had been gripped by the gripper mechanism 30 mounted to impression cylinder 11B of the black image forming unit 10B.

In the first image forming method related to the present invention, next, the sheet member 52, which has been superposingly fastened to the concavo-convex image forming surface 171 is brought into close contact with the concavo-convex image forming surface 171 as described hereinabove. That is, subsequent to the grippers 142 grasping the one edge of the sheet member 52, the rotation of the die cylinder 110 causes the sheet member 52 to pass between the impression cylinder 115 and the die cylinder 110, and as a result of this, the one surface 53 of the sheet member 52 is brought into close contact with the surface of the photo curable resin that has been saturated onto the concavo-convex pattern 173 of the concavo-convex image forming die 170.

In the first image forming method related to the present invention, next, a light is emitted from the other surface 54 side of the sheet member 52 in the state in which the rotation of the die cylinder 110 has brought the sheet member 52 into close contact with the concavo-convex image forming surface 171 as described hereinabove. In so doing, the photo curable resin is cured while the close-contact state of the sheet member 52 and the concavo-convex image forming surface 171 is maintained, and, in addition, while the shape of the concavo-convex pattern 173 formed in the concavo-convex image forming die 170 is maintained as it is. As a result, the shape of the concavo-convex image forming surface, that is, the initial shape is maintained until the photo curable resin is cured, even when the photo curable resin is in a liquid state or a melt-softened state. Then, the concavo-convex image forming surface 171 of the concavo-convex image forming die 170 is formed so as to make the desired concavo-convex image when planar.

In the first image forming method related to the present invention, a surface coating layer is formed on the IP image 58 as desired. Specifically, the sheet member 52 on which are formed the IP image 58 and convex lenses 55 is transported from the die cylinder 110 to the sheet material transporter 27. Next, the sheet member 52 is conveyed from the sheet material transporter 27 to the impression cylinder 42 of the surface coating unit 40, and a surface coating agent is applied to the other surface 54 of the sheet member 52 on which the IP image 58 has been formed. The surface coating agent is fed from the storage part 41 to the sheet member 52 by way of the second feed roller 44 and the first feed roller 43. The fed surface coating agent is cured using an established method, forming a surface coating layer on top of the IP image 58. Furthermore, the surface coating agent capable of being used is not particularly restricted to conventional known coating materials.

In this way, an image formed matter in which images have been formed on both surfaces 53 and 54 of the sheet member 52 is manufactured. In particular, the stereoscopic IP sheet 57 shown in Fig. 16 can be manufactured using a concavo-convex image forming die 170 capable of forming a microarray lens.

Another example of an image forming method related to the present invention (hereinafter, referred to as the second image forming method related to the present invention) is characterized by having a step for mounting a concavo-convex image forming die 170, which has a concavo-convex image forming surface 171 and a mounting surface 172, to the outer circumferential surface of a die cylinder 110 such that this concavo-convex image forming surface 171 is on the outer side; a step for feeding a photo curable resin onto the concavo-convex image forming surface 171; a step for bringing a sheet material, which has been superposingly fastened to the concavo-convex image forming surface 171, into close contact with the concavo-convex image forming surface 171; a step for emitting a light from the side of the sheet material in a state in which the sheet material and the concavo-convex image forming surface 171 are in close contact; a step for transporting a sheet material on which a concavo-convex image has been formed like this to a planar image forming unit group 10 by a gripping changeover in the gripper mechanisms 30; and a step for forming a four-color planar image on the transported sheet material.

In the second image forming method related to the present invention, first, an image forming apparatus 3 and a sheet member 52 are respectively prepared basically the same as the first image forming method related to the present invention. In the second image forming method related to the present invention, next, a convex lens 55 is formed either on the entire surface of the one surface 53 of the sheet member 52 or a portion thereof by a concavo-convex image forming unit 100 basically in the same way as the concavo-convex image forming method related to the present invention.

In the second image forming method related to the present invention, next, the sheet member 52 on which the convex lens 55 is formed is transported from the die cylinder 110 to the sheet material transporter 28 by a gripping changeover in the gripper mechanisms 140 and 30, and next, is transported from the sheet material transporter 28 to impression cylinder 11B by a gripping changeover in the gripper mechanisms 30. In this way, the sheet member 52 is transported to the impression cylinder 11B without changing the relative gripping locations at which the sheet member 52 had been gripped by the grippers 142 of the die cylinder 110.

In the second image forming method related to the present invention, next, a four-color IP image 58 is formed on the other surface 54 of the sheet member 52 as the sheet member 52, which has been fastened to impression cylinder 11B, is being transported from impression cylinder 11B to intermediate cylinder 21, impression cylinder 11C, intermediate cylinder 22, impression cylinder 11M, intermediate cylinder 23, and impression cylinder 11Y through a gripping changeover in the gripper mechanisms 30. The forming of the IP image 58 is basically the same as the forming of the IP image 58 in the first image forming method related to the present invention.

In this way, an image formed matter in which images have been formed on both surfaces 53 and 54 of the sheet member 52 can be manufactured. In particular, the stereoscopic IP sheet 57 shown in Fig. 16 can be manufactured using a concavo-convex image forming die 170 capable of forming a microarray lens.

The image forming apparatuses 1 to 4 related to the present invention, as well as the first image forming method related to the present invention and the second image forming method related to the present invention, make the IP image 58, which has been formed on the other surface 54 of the sheet member 52, and the plurality of convex lenses 55, which has been formed in the one surface 53 of the sheet member 52, highly accurately registered on both the front and back sides of the sheet member 52 (In the present invention, may also be referred to as double sided registration), because it is possible for the sheet member 52 to be constantly gripped by a plurality of gripper mechanisms 30 and 140, and, as a result, to be transported either from the planar image forming unit group 10 to the concavo-convex image forming unit 100, or from the concavo-convex image forming unit 100 to the planar image forming unit group 10 without changing the relative gripping locations of the grippers 32 and 142 on the sheet member 52, which had been gripped by the grippers 32 and 142 until an IP image 58 and a convex lens 55 are formed.

In particular, the image forming apparatuses 1 to 4 related to the present invention, as well as the first image forming method related to the present invention and the second image forming method related to the present invention, will form an IP image 58 and a convex lens 55 by maintaining this positional shift as it is, and as such, the IP image 58 and convex lens 55, which are to be formed on both sides of the sheet member 52, are highly accurately registered even when positional shifting occurs relative to the sheet member 52, even if the position of the sheet member 52, which is set in the feeders (not shown in Figs. 10 or 13 to 15) of the image forming apparatuses 1 to 4 and clasped to either the impression cylinder 11B of the planar image forming unit group 10 or the die cylinder 110 of the concavo-convex image forming unit, should shift relative to either the impression cylinder 11B or the die cylinder 110.

Thus, in accordance with the image forming apparatuses 1 to 4 related to the present invention, as well as the first image forming method related to the present invention and the second image forming method related to the present invention, it is possible to form an IP image 58 and a convex lens 55, having high double-sided registration accuracy, either on the whole or a portion of the respective surfaces of the sheet member 52 with one pass and, in addition, in-line even when the imaging forming material on which the IP image 58 and convex lens 55 are formed is a sheet member 52, which is a sheet material. Then, in accordance with the image forming apparatuses 1 to 4 related to the present invention, as well as the first image forming method related to the present invention and the second image forming method related to the present invention, the double-sided registration accuracy of the IP image 58 and the convex lens 55, for example, can achieve high accuracy of around ±5 µm that is not achievable with conventional manufacturing apparatuses or manufacturing methods. The reason for this is that the gripping changeover accuracy of the grippers is normally around 5 µm.

Therefore, the image forming apparatuses 1 to 4 related to the present invention, as well as the first image forming method related to the present invention and the second image forming method related to the present invention can preferably be applied to the manufacture of stereoscopic sheets on either the entire or a portion of which is formed a lenticular image and an IP image requiring highly accurate registration. Then, all the manufactured stereoscopic sheets can be the desired stereoscopic view.

Further, in accordance with the image forming apparatuses 1 to 4 related to the present invention, as well as the first image forming method related to the present invention and the second image forming method related to the present invention, adjusting the conditions of the image forming apparatuses 1 to 4 related to the present invention one time makes it possible to reproducibly achieve high registration accuracy in a large number of sheet members 52 with practically no variations in registration accuracy per sheet member 52 even when the imaging forming material on which the IP image 58 and convex lens 55 are formed is a sheet member 52, which is a sheet material. That is, it is possible to carry out the high-yield manufacture of an image formed matter in which a concavo-convex image and a planar image are registered with a high degree of accuracy in one-pass and, in addition, in-line.

In particular, in accordance with the image forming apparatuses 1 to 4 related to the present invention, as well as the first image forming method related to the present invention and the second image forming method related to the present invention, it is possible to manufacture a stereoscopic IP sheet 57 and a stereoscopic lenticular sheet 59, on which are formed convex lenses 55, 56 having a height of not less than 1 µm but not more than 2 mm, without losing the shapes of these convex lenses 55, 56, which are firmly in close contact with the sheet member 52, and, in addition, while reproducibly realizing either an IP image 58 or a lenticular image 60 and convex lenses 55, 56 with highly accurate double-sided registration.

Thus, in accordance with the image forming apparatuses 1 to 4 related to the present invention, as well as the first image forming method related to the present invention and the second image forming method related to the present invention, since it is possible to reproducibly realize either an IP image 58 or a lenticular image 60 and convex lenses 55, 56 having highly accurate double-sided registration, the stereoscopic IP sheet 57 and stereoscopic lenticular sheet 59 are of stable quality and improved production yields, with the result that these stereoscopic sheets 57 and 59 have an extremely high competitive edge in the manufacturing process in that inspection work, which is difficult and requires skilled inspectors, is unnecessary after these stereoscopic sheets 57 and 59 have been manufactured.

In addition, in accordance with the image forming apparatuses 1 and 2 related to the present invention, as well as the first image forming method related to the present invention, relative to the conveyance direction of the sheet member 52, the planar image forming unit 10 is arranged on the upstream side and the concavo-convex image forming unit 100 is arranged on the downstream side, such that the manufacture of an image formation is completed by a sheet member 52, on which a concavo-convex image has been formed, simply going through the sheet material transporter 27 and impression cylinder 42, and as a result, it is possible to effectively prevent the concavo-convex image formed on the sheet member 52 from pulling away from the sheet member 52 due to being subjected to stress during manufacturing.

The concavo-convex image forming unit and image forming apparatus of the present invention are not limited to the embodiments described hereinabove, and a variety of changes can be made to the embodiments without departing from a scope that makes the objects of the invention of the application achievable.

For example, the resin feeder of the concavo-convex image forming unit related to the present invention can also comprise a resin remover, for example, a fluid scraping blade on the downstream side of the feed roller for removing surplus photo curable resin.

Further, the concavo-convex image forming unit and concavo-convex image forming method related to the present invention were explained by giving the manufacture of a lens sheet as an example, but the concavo-convex image forming method related to the present invention also makes it possible to form a relief, hologram, Braille and other such concavo-convex images.

The lines that join the cylinder cores of the respective impression cylinders 11B, 11C, 11M, 11Y and 42, the respective intermediate cylinders 21, to 23, and the die cylinder 110, as well as the sheet material transporters 26 and 27 in the image forming apparatuses 1 to 4 related to the present invention are installed consecutively in a practically horizontal direction, but in the present invention, the lines that join the cylinder cores of the impression cylinders, intermediate cylinders, die cylinder and sheet material transporter can be installed consecutively in the oblique direction, or the lines that join the cylinder cores thereof can be installed consecutively in a zigzag direction.

Further, in the image forming apparatus 1 to 4 related to the present invention, each of the sheet material transporters 26, 27 and 28 is treated as one intermediate cylinder having a gripper mechanism, but in the present invention, the sheet material transporters can also be treated as a plurality of intermediate cylinders having gripper mechanisms. Furthermore, in the image forming apparatus 1 to 4 related to the present invention, when a sheet material reversing mechanism is not provided, normally an odd number of sheet material transporting means are used when forming a concavo-convex image and a planar image on the front and back sides of the sheet material, and normally an even number of sheet material transporters are used when forming a concavo-convex image and a planar image on the same surface of the sheet material.

Furthermore, in the image forming apparatuses 1 to 4 related to the present invention, the planar image forming unit group 10 comprises a black image forming unit 10B, a cyan image forming unit 10C, a magenta image forming unit 10M, and a yellow image forming unit 10Y, and is configured so as to form a color planar image comprising four colors, but in the present invention, the planar image forming unit group can comprise at least one planar image forming unit without having to comprise a black image forming unit 10B, a cyan image forming unit 10C, a magenta image forming unit 10M, and a yellow image forming unit 10Y.

Further, in the image forming apparatuses 1 to 4 related to the present invention, each of the respective planar image forming units 10B, 10C, 10M and 10Y of the planar image forming unit group 10 is configured so as to form a planar image from the top side relative to a transported sheet material, but in the present invention, the respective planar image forming units can be configured so as to form a planar image from the bottom side relative to a transported sheet material, or can be configured so as to form a planar image from the top side and the bottom side relative to a transported sheet material.

Furthermore, the image forming apparatuses 1 to 4 related to the present invention comprise surface coating units 40, but in the present invention, the image forming apparatus does not have to comprise an image forming apparatus.

An image formed matter manufactured using the image forming apparatus related to the present invention and the image forming method related to the present invention can be a concavo-convex image formed on either the whole or a portion of the one surface of the sheet material, or can be a planar image formed on either the whole or a portion of the other surface of the sheet material. In particular, since the image forming apparatus related to the present invention as well as the image forming method related to the present invention make it possible to realize registration with a high degree of accuracy, this apparatus and this method are ideal for manufacturing an image formed matter in which a concavo-convex image and/or a planar image are formed on a portion of a surface of the sheet material.

Further, the image forming apparatus related to the present invention and the image forming method related to the present invention have been explained using as an example the manufacture of a stereoscopic IP sheet 57 and a stereoscopic lenticular 59 sheet, but the image forming apparatus related to the present invention and the image forming method related to the present invention can also manufacture an image formed matter in which a planar image is formed with a relief, hologram or the like.

Furthermore, in the present invention, the respective impression cylinders, the respective intermediate cylinders, the respective sheet material transporters and so forth are manufactured using an ordinarily selected material, for example, metal, resin or rubber.

## Claims

1. A concave-convex image forming unit (100) comprising:
- a die cylinder (110)having an outer circumferential surface on which a concavo-convex image forming die (170) having a concavo-convex image forming surface (171) and a mounting surface (172) is mounted;
- a resin feeder (150) for feeding a photo curable resin to the concavo-convex image forming surface (171);
- an impression cylinder (115) arranged downstream of the resin feeder (150), for bringing the sheet material into close contact with the concavo-convex image forming surface (171); and
- a light emitter (160) disposed downstream of the impression cylinder (115),
**characterized in that**
- the die cylinder (110) further includes a mounting mechanism (130) by which the concavo-convex image forming die (170) is mounted on the outer circumferential surface, and a gripper mechanism (140) that superposingly fastens a sheet material to the concavo-convex image forming surface (171) and transports the sheet material.

2. The concave-convex image forming unit according to claim 1, **characterized in that**
- the mounting mechanism (130) comprises a first mounting mechanism (131) which comprises a first groove part (133) and a second mounting mechanism (132) which comprises a second groove part (134), wherein the first mounting mechanism (131) is provided with a first set of fastening members (135) and the second mounting mechanism (132) is provided with a second set of fastening members (136), and the fastening members (135, 136) respectively grip and fasten both surfaces of the concavo-convex image forming die (170) in vicinity of opposing edges (174, 175) of the die (170).

3. The concave-convex image forming unit according to claim 2, **characterized in that** at least one of the first mounting mechanism (131) and the second mounting mechanism (132) is movable, whereby a mounting location of the concavo-convex image forming die (170) relative to the die cylinder (110) is adjustable.

4. The concave-convex image forming unit according to claim 2 or 3, **characterized in that** the gripper mechanism (140) is arranged between the first mounting mechanism (131) and the second mounting mechanism (132), and the second groove part (134) further houses the gripper mechanism (140).

5. An image forming apparatus comprising:
- at least one planar image forming unit (10), which comprises a gripper mechanism (30) that fastens a sheet material (52) to a cylinder (11B, 11C, 11M, 11Y, 21, 22, 23) and transports the sheet material, and which forms a planar image on the sheet material;
- the concavo-convex image forming unit (100) according to claim 1; and
- a sheet material transporter that transports the sheet material either from the planar image forming unit (10) to the concavo-convex image forming unit (100) or from the concavo-convex image forming unit (100) to the planar image forming unit (10) through a gripping changeover in the gripper mechanism (30, 140).

6. A concavo-convex image forming method comprising:
- a first step of mounting a concavo-convex image forming die having a concavo-convex image forming surface and a mounting surface on the outer circumferential surface of a die cylinder having the gripper mechanism according to claim 1 such that this concavo-convex image forming surface is on the outer side;
- a second step of feeding a photo curable resin onto the concavo-convex image forming surface;
- a third step of bringing a sheet material, which has been superposingly fastened to the concavo-convex image forming surface, in close contact with the concavo-convex image forming surface; and
- a fourth step of emitting a light from the sheet material side in a state in which the sheet material and the concavo-convex image forming surface are in close contact.

7. An image forming method comprising:
- transporting a sheet material on which a concavo-convex image has been formed by the concavo-convex image forming method according to claim 6 to a planar image forming unit through a gripping changeover in the gripper mechanism; and
- forming a planar image comprising at least one color on the transported sheet material.

8. An image forming method according to claim 6, further comprising a step of:
- transporting a sheet material, on which a planar image comprising at least one color has been formed by a planar image forming unit, to the die cylinder through a gripping changeover in the gripper mechanism, wherein the step is carried out after the second step and before the third step.

## Patentansprüche

1. Konkav-konvexe Bilderzeugungseinheit (100), die umfasst:
- einen Matrizenzylinder (100) mit einer äußeren Umfangsfläche, auf der eine konkav-konvexe Bilderzeugungsmatrize (170) mit einer konkav-konvexen Bilderzeugungsfläche (171) und einer Befestigungsfläche (172) befestigt ist;
- eine Harzzuführeinheit (150) zum Zuführen eines lichthärtenden Harzes zu der konkav-konvexen Bildererzeugungsfläche (171);
- einen Druckzylinder (115), der der Harzzuführeinheit (150) nachfolgend angeordnet ist, um das Blattmaterial mit der konkav-konvexen Bilderzeugungsfläche (171) in engen Kontakt zu bringen, und
- eine Lichtsendeeinheit (160), die dem Druckzylinder (115) nachfolgend angeordnet ist,
**dadurch gekennzeichnet, dass**
- der Matrizenzylinder (110) ferner einen Befestigungsmechanismus (130), durch den die konkav-konvexe Bilderzeugungsmatrize (170) auf der äußeren Umfangsfläche befestigt ist, und einen Greifmechanismus (140), der ein Blattmaterial überlagernd an der konkav-konvexen Bilderzeugungsfläche (171) befestigt und das Blattmaterial befördert, enthält.

2. Konkav-konvexe Bilderzeugungseinheit nach Anspruch 1, **dadurch gekennzeichnet, dass**
- der Befestigungsmechanismus (130) einen ersten Befestigungsmechanismus (131), der einen ersten Nutteil (133) aufweist, und einen zweiten Befestigungsmechanismus (132), der einen zweiten Nutteil (134) aufweist, umfasst, wobei der erste Befestigungsmechanismus (131) mit einer ersten Gruppe von Befestigungselementen (135) versehen ist und der zweite Befestigungsmechanismus (132) mit einer zweiten Gruppe von Befestigungselementen (136) versehen ist und die Befestigungselemente (135, 136) jeweils beide Flächen der konkav-konvexen Bilderzeugungsmatrize (170) in der Nähe von sich gegenüberliegenden Kanten (174, 175) der Matrize (170) greifen und befestigen.

3. Konkav-konvexe Bilderzeugungseinheit nach Anspruch 2, **dadurch gekennzeichnet, dass** der erste Befestigungsmechanismus (131) und/oder der zweite Befestigungsmechanismus (132) beweglich sind, wobei ein Befestigungsort der konkav-konvexen Bilderzeugungsmatrize (170) in Bezug auf den Matrizenzylinder (110) einstellbar ist.

4. Konkav-konvexe Bilderzeugungseinheit nach Anspruch 2 oder 3, **dadurch gekennzeichnet, dass** der Greifmechanismus (140) zwischen dem ersten Befestigungsmechanismus (131) und dem zweiten Befestigungsmechanismus (132) angeordnet ist und der zweite Nutteil (134) ferner den Greifmechanismus (140) beherbergt.

5. Bilderzeugungsvorrichtung, die umfasst:
- mindestens eine planare Bilderzeugungseinheit (10), die einen Greifmechanismus (30) umfasst, der ein Blattmaterial (52) an einem Zylinder (11B, 11C, 11M, 11Y, 21, 22, 23) befestigt und das Blattmaterial befördert; und die ein ebenes Bild auf dem Blattmaterial erzeugt;
- die konkav-konvexe Bilderzeugungseinheit (100) nach Anspruch 1; und
- eine Blattmaterialfördereinheit, die das Blattmaterial entweder von der planaren Bilderzeugungseinheit (10) zu der konkav-konvexen Bilderzeugungseinheit (100) oder von der konkav-konvexen Bilderzeugungseinheit (100) zu der planaren Bilderzeugungseinheit (10) durch eine Greifumstellung in dem Greifmechanismus (30, 140) befördert.

6. Konkav-konvexes Bilderzeugungsverfahren, das umfasst:
- einen ersten Schritt des Befestigens einer konkav-konvexen Bilderzeugungsmatrize mit einer konkav-konvexen Bilderzeugungsfläche und einer Befestigungsfläche auf der äußeren Umfangsfläche eines Matrizenzylinders mit dem Greifmechanismus nach Anspruch 1, so dass sich diese konkav-konvexe Bilderzeugungsfläche auf der äußeren Seite befindet;
- einen zweiten Schritt des Zuführens eines lichthärtenden Harzes zu der konkav-konvexen Bilderzeugungsfläche;
- einen dritten Schritt des Bringens eines Blattmaterials, das an der konkav-konvexen Bilderzeugungsfläche überlagernd befestigt wurde, in engen Kontakt mit der konkav-konvexen Bilderzeugungsfläche; und
- einen vierten Schritt des Aussendens von Licht von der Seite des Blattmaterials in einem Zustand, in dem das Blattmaterial und die konkav-konvexe Bilderzeugungsfläche in engem Kontakt sind.

7. Bilderzeugungsverfahren, das umfasst:
- Befördern eines Blattmaterials, auf dem ein konkav-konvexes Bild durch das konkav-kovexe Bilderzeugungsverfahren nach Anspruch 6 erzeugt wurde, durch eine Greifumstellung in dem Greifmechanismus zu einer planaren Bilderzeugungseinheit; und,
- Erzeugen eines planaren Bildes, das mindestens eine Farbe aufweist, auf dem beförderten Blattmaterial.

8. Bilderzeugungsverfahren nach Anspruch 6, das ferner einen Schritt umfasst:
- Befördern eines Blattmaterials, auf dem ein planares Bild, das mindestens eine Farbe umfasst, durch eine planare Bilderzeugungseinheit erzeugt wurde, durch eine Greifumstellung in dem Greifmechanismus zu dem Matrizenzylinder, wobei der Schritt nach dem zweiten Schritt und vor dem dritten Schritt ausgeführt wird.

## Revendications

1. Unité de formation d'image concave-convexe (100) comprenant :
- un cylindre matrice (110) ayant une surface circonférentielle extérieure sur laquelle est montée une matrice de formation d'image concave-convexe (170) ayant une surface de formation d'image concave-convexe (171) et une surface de montage (172) ;
- un dispositif d'alimentation de résine (150) pour alimenter une résine photodurcissable vers la surface de formation d'image concave-convexe (171) ;
- un cylindre d'impression (115) agencé en aval du dispositif d'alimentation de résine (150) pour amener un matériau en forme de feuille en contact intime avec la surface de formation d'image concave-convexe (171) ; et
- un émetteur de lumière (160) disposé en aval du cylindre d'impression (115) ;
**caractérisée en ce que**
- le cylindre matrice (110) inclut en outre un mécanisme de montage (130) au moyen duquel la matrice de formation d'image concave-convexe (170) est montée sur la surface circonférentielle extérieure, et un mécanisme de préhension (140) qui fixe de manière superposée un matériau en forme de feuille sur la surface de formation d'image concave-convexe (171) et qui transporte le matériau en forme de feuille.

2. Unité de formation d'image concave-convexe selon la revendication 1, **caractérisée en ce que**
- le mécanisme de montage (130) comprend un premier mécanisme de montage (131) qui comprend une première partie de rainure (133) et un second mécanisme de montage (132) qui comprend une seconde partie de rainure (134), tels que le premier mécanisme de montage (131) est doté d'un premier groupe d'éléments de fixation (135) et que le second mécanisme de montage (132) est doté d'un second groupe d'éléments de fixation (136), et les éléments de fixation (135, 136) agrippent respectivement et fixent les deux surfaces de la matrice de formation d'image concave-convexe (170) au voisinage de bordures opposées (174, 175) de la matrice (170).

3. Unité de formation d'image concave-convexe selon la revendication 2, **caractérisée en ce que** l'un au moins du premier mécanisme de montage (131) et du second mécanisme de montage (132) est déplaçable, grâce à quoi un emplacement de montage de la matrice de formation d'image concave-convexe (170) est réglable par rapport au cylindre matrice (110).

4. Unité de formation d'image concave-convexe selon la revendication 2 ou 3, **caractérisée en ce que** le mécanisme de préhension (140) est agencé entre le premier mécanisme de montage (131) et le second mécanisme de montage (132), et la seconde partie de rainure (134) abrite en outre le mécanisme de préhension (140).

5. Appareil de formation d'image comprenant :
- au moins une unité de formation d'image planaire (10), qui comprend un mécanisme de préhension (30) qui fixe un matériau en forme de feuille (52) sur un cylindre (11B, 11C, 11 M, 11Y, 21, 22, 23) et transporte le matériau en forme de feuille, et qui forme une image planaire sur le matériau en forme de feuille ;
- l'unité de formation d'image concave-convexe (100) selon la revendication 1 ; et
- un dispositif de transport de matériau en forme de feuille qui transporte le matériau en forme de feuille soit depuis l'unité de formation d'image planaire (10) vers l'unité de formation d'image concave-convexe (100) soit depuis l'unité de formation d'image concave-convexe (100) vers l'unité de formation d'image planaire (10) au moyen d'une inversion de prise dans le mécanisme de préhension (30, 140).

6. Procédé de formation d'image concave-convexe, comprenant :
- une première étape consistant à monter une matrice de formation d'image concave-convexe ayant une surface de formation d'image concave-convexe et surface de montage sur la surface circonférentielle extérieure d'un silane matrice ayant le mécanisme de préhension selon la revendication 1, de telle façon que cette surface de formation d'image concave-convexe se trouve du côté extérieur ;
- une seconde étape consistant à alimenter une résine photodurcissable sur la surface de formation d'image concave-convexe ;
- une troisième étape consistant à amener un matériau en forme de feuille, qui a été fixé en superposition sur la surface de formation d'image concave-convexe, en contact intime avec la surface de formation d'image concave-convexe ; et
- une quatrième étape consistant à émettre une lumière depuis le côté du matériau en forme de feuille dans une situation dans laquelle le matériau en forme de feuille et la surface de formation d'image concave-convexe sont en contact intime.

7. Procédé de formation d'image, comprenant :
- une étape consistant à transporter un matériau en forme de feuille sur lequel une image concave-convexe a été formée par le procédé de formation d'image concave-convexe selon la revendication 6 vers une unité de formation d'image planaire au moyen d'une inversion de prise dans le mécanisme de préhension ; et
- une étape consistant à former une image planaire comprenant au moins une couleur sur le matériau en forme de feuille transporté.

8. Procédé de formation d'image selon la revendication 6, comprenant en outre une étape consistant à :
- transporter un matériau en forme de feuille, sur lequel une image planaire comprenant au moins une couleur a été formée par une unité de formation d'image planaire, vers le cylindre matrice au moyen d'une inversion de prise dans le mécanisme de préhension, dans lequel ladite étape est effectuée après la seconde étape et avant la troisième étape.
